# EUROPEAN PATENT SPECIFICATION

(11) **EP 4 506 786 B1**
(45) Date of publication and mention of the grant of the patent: **27.05.2026**
(21) Application number: 22939433.3
(22) Date of filing: 30.04.2022
(51) Int. Cl.: G06F 3/01, B60R 1/00, B60K 35/10, B60K 35/22, G06F 3/16

(54) **INTERACTION METHOD AND ELECTRONIC DEVICE**
INTERAKTIONSVERFAHREN UND ELEKTRONISCHE VORRICHTUNG
PROCÉDÉ D'INTERACTION ET DISPOSITIF ÉLECTRONIQUE

(43) Date of publication of application: 12.02.2025
(73) Proprietor: Shenzhen Yinwang Intelligent Technologies Co., Ltd., Shenzhen, Guangdong 518129 (CN)
(72) Inventor: LI, Shuai, Shenzhen, Guangdong 518129 (CN); LIU, Yang, Shenzhen, Guangdong 518129 (CN); XIA, Pei, Shenzhen, Guangdong 518129 (CN); SONG, Xianxi, Shenzhen, Guangdong 518129 (CN); ZHOU, Jin, Shenzhen, Guangdong 518129 (CN)
(74) Representative: Gill Jennings & Every LLP
(86) International application number: PCT/CN2022/090832
(87) International publication number: WO 2023/206590

(56) References cited:
- CN-A- 107 380 064
- CN-A- 108 446 310
- CN-A- 109 739 352
- CN-A- 110 696 613
- CN-A- 111 016 787
- US-A1- 2010 253 542
- US-A1- 2015 062 168
- US-A1- 2015 178 990
- US-A1- 2020 219 320

## Description

### TECHNICAL FIELD

Embodiments of this application relate to the field of intelligent vehicle technologies, and in particular, to an interaction method and an electronic apparatus.

### BACKGROUND

In a traveling process of a vehicle, a user (a driver or a passenger) in the vehicle may be curious about geographical landmarks around the vehicle, but the user does not know an environment in which the user is located. In this case, the user needs to open a mobile phone, find a query application on the mobile phone, and perform query by using the query application. The user may perform screening one by one to obtain a query result. After obtaining the query result, the user may be more interested in the query result and want to visit. However, the vehicle has already passed by, and the user can only regret. It can be learned that, in the entire query process, operations are complex and inconvenient, and query timeliness is poor.

US2020219320A1 discloses a multimodal user interface for use in an automobile. The multimodal user interface may display information on a windshield of the automobile, such as by projecting information on the windshield, and may accept input from a user via multiple modalities, which may include a speech interface as well as other interfaces. The other interfaces may include interfaces allowing a user to provide geometric input by indicating an angle. In some examples, a user may define a task to be performed using multiple different input modalities. For example, the user may provide via the speech interface speech input describing a task that the user is requesting be performed, and may provide via one or more other interfaces geometric parameters regarding the task. The multimodal user interface may determine the task and the geometric parameters from the inputs.

### SUMMARY

Embodiments of this application provide an interaction method and an electronic apparatus, to implement a simple operation and timely query.

To achieve the foregoing objective, the following technical solutions are used in embodiments of this application.

According to a first aspect, an embodiment of this application provides an interaction method, applied to an electronic apparatus. The method includes: receiving a first operation of a first user in a vehicle; collecting, in response to the first operation, a line-of-sight direction of the first user and a first position of the vehicle, where the line-of-sight direction includes a horizontal line-of-sight direction and a vertical line-of-sight direction; marking and displaying, on a display interface based on the first position, the horizontal line-of-sight direction, and a line-of-sight height included angle, one or more geographical markers that meet a first condition, wherein the line-of-sight height included angle is an included angle between the vertical line-of-sight direction and a horizontal ground. The interaction method may further comprise selecting one or more first geographical markers based on the first position, the horizontal line-of-sight direction, and a line-of-sight height included angle; marking each geographical marker in the one or more first geographical markers based on a position of each geographical marker in the one or more first geographical markers and the first position, and displaying the marked geographical marker on a display interface displayed in an augmented reality head-up display system; receiving a second operation on the display interface; and selecting, in response to the second operation, a target geographical marker from the one or more first geographical markers. In this way, the user in the vehicle can perform a simple operation, to select and query an interested building in time, so that the simple operation and timely query are implemented.

In a specific implementation, the marking each geographical marker in the one or more first geographical markers based on a position of each geographical marker in the one or more first geographical markers and the first position is specifically: determining a distance between each geographical marker in the one or more first geographical markers and the vehicle based on the position of each geographical marker in the one or more first geographical markers and the first position; and marking each geographical marker in the one or more first geographical markers based on the distance between each geographical marker in the one or more first geographical markers and the vehicle.

In a specific implementation, the selecting one or more first geographical markers based on the first position, the horizontal line-of-sight direction, and a line-of-sight height included angle is specifically: calibrating the first position of the vehicle on a map, and calibrating the line-of-sight direction of the first user on the vehicle; and selecting, by using the first position as a start point, the one or more first geographical markers on the map in the horizontal line-of-sight direction based on the line-of-sight height included angle.

In a specific implementation, the selecting, by using the first position as a start point, the one or more first geographical markers on the map in the horizontal line-of-sight direction based on the line-of-sight height included angle is specifically: obtaining one or more second geographical markers by using the first position as a start point and in the horizontal line-of-sight direction, where an arrangement order of geographical markers in the one or more second geographical markers is related to an altitude and a height; and filtering out, in the horizontal line-of-sight direction based on the line-of-sight height included angle, one or more obstructed geographical markers from the one or more second geographical markers, to obtain the one or more first geographical markers.

In a specific implementation, the filtering out, in the horizontal line-of-sight direction based on the line-of-sight height included angle, one or more obstructed geographical markers from the one or more second geographical markers, to obtain the one or more first geographical markers is specifically: filtering out the one or more obstructed geographical markers from the one or more second geographical markers in the horizontal line-of-sight direction, to obtain one or more third geographical markers; calculating a theoretical height of each geographical marker in the one or more third geographical markers based on a position of each geographical marker in the one or more third geographical markers, the first position, and the line-of-sight height included angle; and determining, in the one or more third geographical markers, one or more geographical markers whose theoretical heights are less than or equal to actual heights as the one or more first geographical markers.

In some specific implementations, after the marking each geographical marker in the one or more first geographical markers based on a position of each geographical marker in the one or more first geographical markers and the first position, the method further includes: numbering each geographical marker in the one or more first geographical markers based on a first preset sorting.

In some specific implementations, after the selecting one or more first geographical markers based on the first position, the horizontal line-of-sight direction, and a line-of-sight height included angle, the method further includes: when a quantity of geographical markers in the one or more first geographical markers is greater than a preset value, filtering out, based on a second preset sorting of the geographical markers in the one or more first geographical markers, a geographical marker whose ranking is greater than a specified ranking from the one or more first geographical markers.

In a specific implementation, the second operation includes at least one of the following: a voice operation, a touch operation, a button operation, a gesture operation, and a gaze operation.

In a specific implementation, the second operation includes the gesture operation, and the selecting, in response to the second operation, a target geographical marker from the one or more first geographical markers is specifically: performing, in response to a first gesture operation, color deepening displaying on a to-be-selected geographical marker in the one or more first geographical markers; and determining, in response to a second gesture operation, the to-be-selected geographical marker as the target geographical marker.

According to a second aspect, an embodiment of this application provides an electronic apparatus. The electronic apparatus includes a first receiving unit, configured to receive a first operation of a first user in a vehicle; a collection unit, configured to collect, in response to the first operation, a line-of-sight direction of the first user and a first position of the vehicle, where the line-of-sight direction includes a horizontal line-of-sight direction and a vertical line-of-sight direction; and a display unit, configured to mark and display, on a display interface based on the first position, the horizontal line-of-sight direction, and a line-of-sight height included angle, one or more geographical markers that meet a first condition, wherein the line-of-sight height included angle is an included angle between the vertical line-of-sight direction and a horizontal ground. The electronic apparatus may further comprise a first selecting unit, configured to select one or more first geographical markers based on the first position, the horizontal line-of-sight direction, and a line-of-sight height included angle; wherein the display unit is further configured to: mark each geographical marker in the one or more first geographical markers based on a position of each geographical marker in the one or more first geographical markers and the first position, and display the marked geographical marker on a display interface displayed in an augmented reality head-up display system; a second receiving unit, configured to receive a second operation on the display interface; and a second selecting unit, configured to select, in response to the second operation, a target geographical marker from the one or more first geographical markers. In this way, the user in the vehicle can perform a simple operation, to select and query an interested building in time, so that the simple operation and timely query are implemented.

In a specific implementation, the display unit is further configured to: determine a distance between each geographical marker in the one or more first geographical markers and the vehicle based on the position of each geographical marker in the one or more first geographical markers and the first position; and mark and display each geographical marker in the one or more first geographical markers based on the distance between each geographical marker in the one or more first geographical markers and the vehicle.

In a specific implementation, the first selecting unit is further configured to: calibrate the first position of the vehicle on a map, and calibrate the line-of-sight direction of the first user on the vehicle; and select, by using the first position as a start point, the one or more first geographical markers on the map in the horizontal line-of-sight direction based on the line-of-sight height included angle.

In a specific implementation, the first selecting unit is further configured to: obtain one or more second geographical markers by using the first position as a start point and in the horizontal line-of-sight direction, where an arrangement order of geographical markers in the one or more second geographical markers is related to an altitude and a height; and filter out, in the horizontal line-of-sight direction based on the line-of-sight height included angle, one or more obstructed geographical markers from the one or more second geographical markers, to obtain the one or more first geographical markers.

In a specific implementation, the first selecting unit is further configured to: filter out the one or more obstructed geographical markers from the one or more second geographical markers in the horizontal line-of-sight direction, to obtain one or more third geographical markers; calculate a theoretical height of each geographical marker in the one or more third geographical markers based on a position of each geographical marker in the one or more third geographical markers, the first position, and the line-of-sight height included angle; and determine, in the one or more third geographical markers, one or more geographical markers whose theoretical heights are less than or equal to actual heights as the one or more first geographical markers.

In some specific implementations, the electronic apparatus further includes: a numbering unit, configured to number each geographical marker in the one or more first geographical markers based on a first preset sorting.

In some specific implementations, the electronic apparatus further includes: a filtering unit, configured to: when a quantity of geographical markers in the one or more first geographical markers is greater than a preset value, filter out, based on a second preset sorting of the geographical markers in the one or more first geographical markers, a geographical marker whose ranking is greater than a specified ranking from the one or more first geographical markers.

In a specific implementation, the second operation includes at least one of the following: a voice operation, a touch operation, a button operation, a gesture operation, and a gaze operation.

In a specific implementation, the second operation includes the gesture operation, and the second selecting unit is further configured to: perform, in response to a first gesture operation, color deepening displaying on a to-be-selected geographical marker in the one or more first geographical markers; and determine, in response to a second gesture operation, the to-be-selected geographical marker as the target geographical marker.

### BRIEF DESCRIPTION OF DRAWINGS

FIG. 1 is a diagram of an existing scenario;
FIG. 2 is a diagram of an application scenario of an interaction method according to an embodiment of this application;
FIG. 3 is a diagram of an application scenario of an interaction method according to an embodiment of this application;
FIG. 4 is a diagram of an application scenario of an interaction method according to an embodiment of this application;
FIG. 5A is a diagram of a software architecture of an electronic apparatus according to an embodiment of this application;
FIG. 5B is a schematic flowchart of an interaction method according to an embodiment of this application;
FIG. 6A is a schematic flowchart of an interaction method according to an embodiment of this application;
FIG. 6B is a schematic flowchart of an interaction method according to an embodiment of this application;
FIG. 6C is a schematic flowchart of an interaction method according to an embodiment of this application;
FIG. 6D is a schematic flowchart of an interaction method according to an embodiment of this application;
FIG. 7 is a diagram of calibrating a camera on a vehicle according to an embodiment of this application;
FIG. 8 is a diagram of an application scenario of an interaction method according to an embodiment of this application;
FIG. 9 is an example principle diagram of application of an interaction method according to an embodiment of this application;
FIG. 10 is an example principle diagram of application of an interaction method according to an embodiment of this application;
FIG. 11 is a diagram of a structure of an electronic apparatus according to an embodiment of this application;
FIG. 12 is a schematic flowchart of another interaction method according to an embodiment of this application; and
FIG. 13 is a diagram of a structure of another electronic apparatus according to an embodiment of this application.

### DESCRIPTION OF EMBODIMENTS

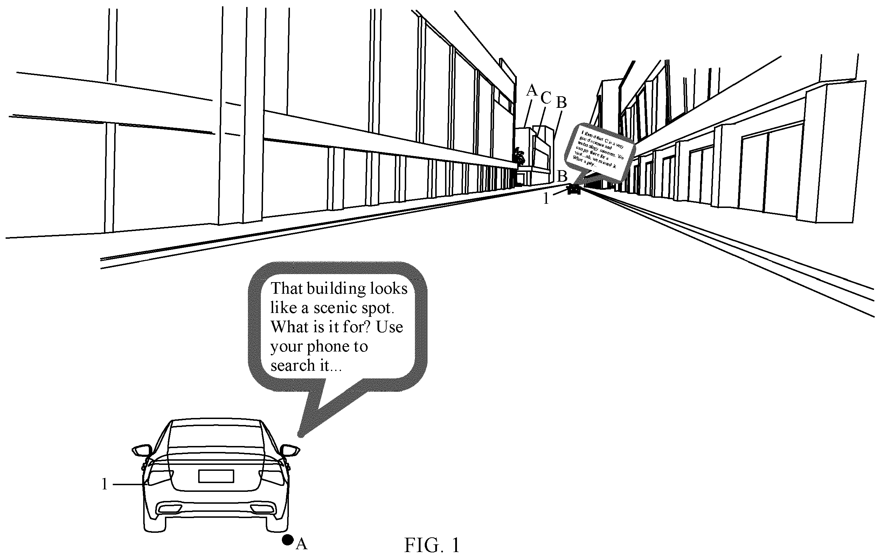

Generally, a vehicle travels on a city road, and a user in the vehicle wants to have a trip while driving. FIG. 1 is a diagram of a vehicle traveling scenario. As shown in FIG. 1, a vehicle 1 travels at a position A, and one or more users (a driver or a passenger) in the vehicle 1 may be curious about a left front building C. For example, a user a (driver) says: "That building looks like a scenic spot. What is it for? Use your phone to search it...", a user b takes out a mobile phone, and starts a query application (for example, a browser A) on the mobile phone to perform query. When the user b finds related information about the building C, the vehicle 1 travels at a position B. At this time, the user b says: "I found that the building C is a very good science and technology museum. We can go there for a visit...ah, we missed it. What a pity...". In this way, the user of the vehicle 1 can only regretfully pass by and wait for a next opportunity to visit. It can be learned that, in an entire process, information query operations are complex and inconvenient, and query timeliness is poor.

To resolve the foregoing technical problem, an embodiment of this application provides an interaction method. The method is applied to an electronic apparatus, and the method includes: The electronic apparatus receives a first operation of a first user in a vehicle. The electronic apparatus collects, in response to the first operation, a line-of-sight direction of the first user and a first position of the vehicle, where the line-of-sight direction includes a horizontal line-of-sight direction and a vertical line-of-sight direction. The electronic apparatus selects one or more first geographical markers based on the first position, the horizontal line-of-sight direction, and a line-of-sight height included angle, where the line-of-sight height included angle is an included angle between the vertical line-of-sight direction and a horizontal ground. The electronic apparatus marks each geographical marker in the one or more first geographical markers based on a position of each geographical marker in the one or more first geographical markers and the first position, and displays the marked geographical marker on a display interface displayed in an augmented reality head-up display system. Augmented reality head-up display is a virtual 3D world, and the virtual 3D world and a map are calibrated to form a parallel world. The electronic apparatus receives a second operation on the display interface. The electronic apparatus selects, in response to the second operation, a target geographical marker from the one or more first geographical markers.

The electronic apparatus may include different product forms in a vehicle field, for example, a vehicle-mounted chip, a vehicle-mounted apparatus (for example, an in-vehicle infotainment, a vehicle-mounted computer, or a head-up display (head-up display, HUD)), an entire vehicle, or a server (virtual or physical). In this embodiment of this application, an example in which the electronic apparatus is an entire vehicle is used for description.

The first operation may include a voice operation, a gesture operation, a button operation, a sliding operation, and the like. This is not specifically limited in this embodiment of this application. Similarly, the second operation may be the same as the first operation, and details are not described herein again.

For example, the interaction method provided in this embodiment of this application is applied to the following scenario. Details are as follows: An example in which the first operation includes a first voice operation and the second operation includes a second voice operation is used.

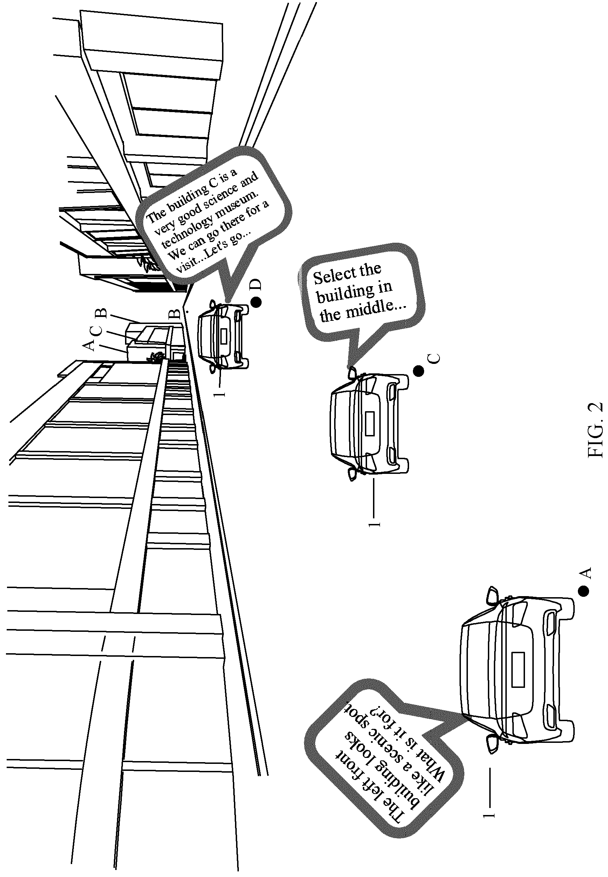

FIG. 2 is a diagram of another vehicle traveling scenario. As shown in FIG. 2, a vehicle travels on a city road, and a user in the vehicle wants to have a trip while driving. As shown in FIG. 2, a vehicle 1 travels at a position A, and one or more users (a driver or a passenger) in the vehicle 1 may be curious about a left front building C. A user a (driver) says: "The left front building looks like a scenic spot. What is it for?", that is, "The left front building looks like a scenic spot. What is it for?" may be understood as a first voice operation.

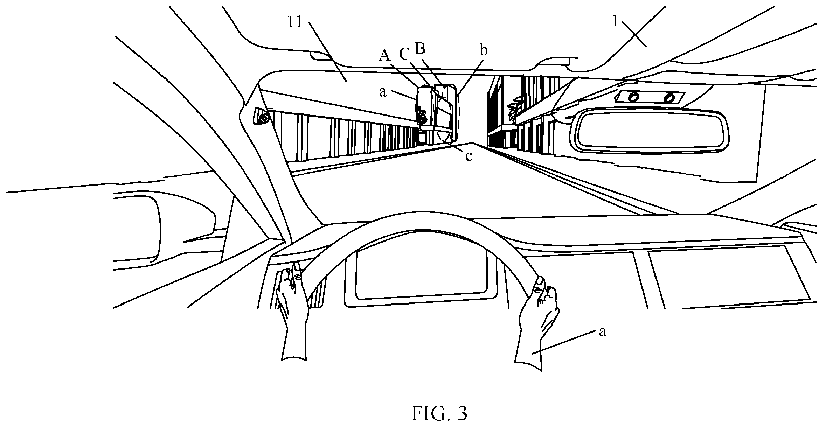

The vehicle receives the first voice operation of the user a, and a first camera in the vehicle collects, in response to the first voice operation, a line-of-sight direction of the user a. The line-of-sight direction may include a horizontal line-of-sight direction and a vertical line-of-sight direction. The vehicle obtains a first position of the vehicle. The first position may be understood as a traveling direction of the vehicle and coordinates of a position of the vehicle. A map application is installed on the vehicle. The vehicle may calibrate the first position of the vehicle on a map, and then calibrate the line-of-sight direction of the user a on the vehicle. In other words, the position of the vehicle, the map, and the line-of-sight direction of the user are all converted into a same coordinate system. The vehicle selects one or more first geographical markers on the map based on the line-of-sight direction of the user a and the first position of the vehicle, marks the one or more first geographical markers, and displays the one or more first geographical markers on a display interface displayed in an augmented reality head-up display system. In this way, the augmented reality head-up display system of the vehicle displays each geographical marker on a front windshield of the vehicle. For example, as shown in FIG. 3, on an interface presented on a front windshield 11 of the vehicle 1, an identifier c is displayed on the building C through the front windshield, an identifier a is displayed on a building A through the front windshield, and an identifier b is displayed on a building B through the front windshield.

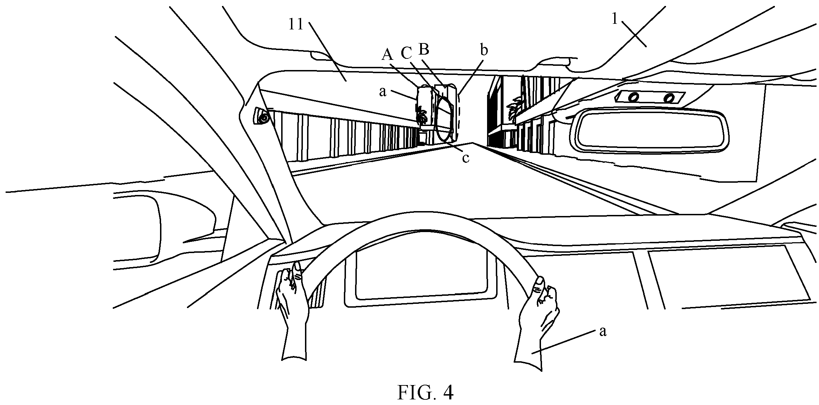

For example, as shown in FIG. 2, the vehicle 1 travels at the position A, and the one or more users (the driver or the passenger) in the vehicle 1 may be curious about the left front building C. The user a (driver) says: "The left front building looks like a scenic spot. What is it for?", that is, "The left front building looks like a scenic spot. What is it for?" may be understood as the first voice operation. The vehicle 1 receives the first voice operation. In response to the first voice operation, the interface shown in FIG. 3 is presented on the front windshield 11 of the vehicle 1. On the interface, the identifier c is displayed on the building C through the front windshield 11, the identifier a is displayed on the building A through the front windshield 11, and the identifier b is displayed on the building B through the front windshield 11. In this case, the vehicle 1 travels at a position C, and the user a (driver) says: "Select the building in the middle... ", that is, "Select the building in the middle..." may be understood as a second voice operation. The vehicle 1 receives the second voice operation. In response to the second voice operation, an interface shown in FIG. 4 is presented on the front windshield 11 of the vehicle 1. On the interface, the identifier c is displayed in bold. In addition, the vehicle 1 may broadcast a brief introduction of the building C covered by the identifier c. In this case, the vehicle 1 travels at a position D. The user in the vehicle 1 says: "The building C is a very good science and technology museum. We can go there for a visit...Let's go...". In this way, the vehicle can just turn to the building C when traveling to the position D.

It can be learned that, in embodiments of this application, the user in the vehicle can perform a simple operation (for example, a voice operation), to select and query an interested building in time, so that the simple operation and timely query are implemented.

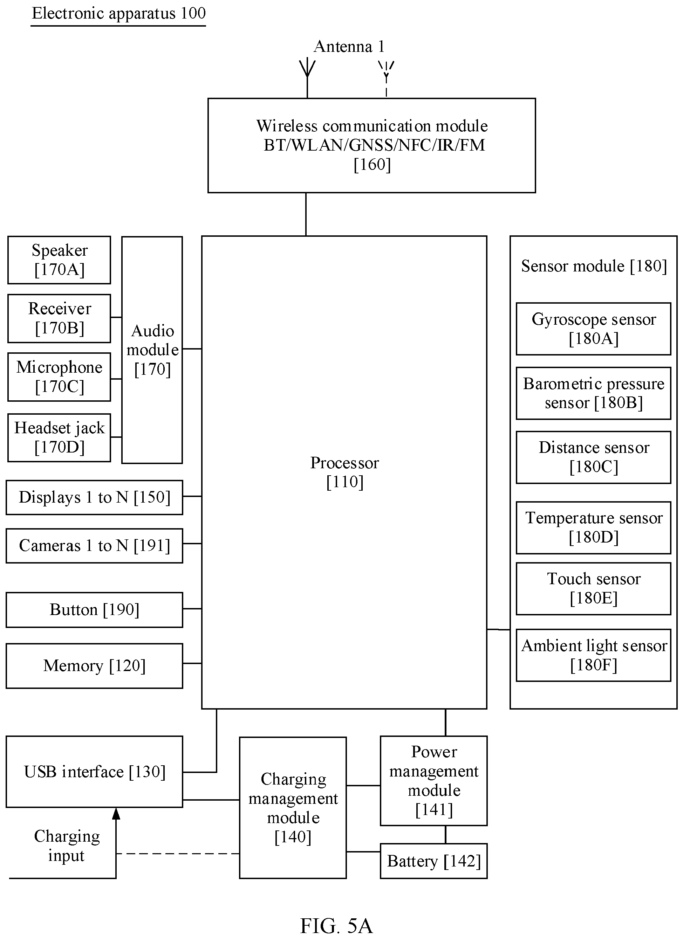

FIG. 5A is a diagram of a structure of an electronic apparatus 100.

The electronic apparatus 100 may include a processor 110, a memory 120, a universal serial bus (universal serial bus, USB) interface 130, a charging management module 140, a power management module 141, a battery 142, an antenna 1, a wireless communication module 160, an audio module 170, a speaker 170A, a receiver 170B, a microphone 170C, a headset jack 170D, a sensor module 180, a button 190, a camera 191, a display 150, and the like. The sensor module 180 may include a gyroscope sensor 180A, a barometric pressure sensor 180B, a distance sensor 180C, a temperature sensor 180D, a touch sensor 180E, an ambient light sensor 180F, and the like.

It may be understood that the structure shown in this embodiment of this application does not constitute a specific limitation on the electronic apparatus 100. In some other embodiments of this application, the electronic apparatus 100 may include more or fewer components than those shown in the figure, or a combination of a part of the components, or splits from a part of the components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The controller may generate an operation control signal based on instruction operation code and a timing signal, and complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, and/or the like.

The I2C interface is a bidirectional synchronous serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180E, a charger, a flash, the camera 191, and the like through different I2C bus interfaces. For example, the processor 110 may be coupled to the touch sensor 180E through the I2C interface, so that the processor 110 communicates with the touch sensor 180E through the I2C bus interface, to implement a touch function of the electronic apparatus 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, to sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 150 or the camera 191. The MIPI interfaces include a camera serial interface (camera serial interface, CSI), a display serial interface (display serial interface, DSI), and the like. In some embodiments, the processor 110 communicates with the camera 191 through the CSI, to implement a photographing function of the electronic apparatus 100. The processor 110 communicates with the display 150 through the DSI, to implement a display function of the electronic apparatus 100.

The GPIO interface may be configured by using software. The GPIO interface may be configured as a control signal or a data signal. In some embodiments, the GPIO interface may be configured to connect the processor 110 to the camera 191, the display 150, the wireless communication module 160, the audio module 170, the sensor module 180, and the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic apparatus 100, may be configured to transmit data between the electronic apparatus 100 and a peripheral device, or may be configured to connect to a headset, to play an audio through the headset. The interface may alternatively be configured to connect to another electronic apparatus, for example, an augmented reality (augmented reality, AR) device.

It may be understood that an interface connection relationship between modules illustrated in this embodiment of this application is merely an example for description, and does not constitute a limitation on the structure of the electronic apparatus 100. In some other embodiments of this application, the electronic apparatus 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments in which wireless charging is used, the charging management module 140 may receive a wireless charging input through a wireless charging coil of the electronic apparatus 100. When charging the battery 142, the charging management module 140 may further supply power to the electronic apparatus through the power management module 141.

The power management module 141 is configured to connect to the battery 142, the charging management module 140, and the processor 110. The power management module 141 receives an input from the battery 142 and/or the charging management module 140, and supplies power to the processor 110, the memory 120, the display 150, the camera 191, the wireless communication module 160, and the like. The power management module 141 may be further configured to monitor parameters such as a battery capacity, a quantity of battery cycles, and a battery health status (electric leakage or impedance). In some other embodiments, the power management module 141 may also be disposed in the processor 110. In some other embodiments, the power management module 141 and the charging management module 140 may alternatively be disposed in a same device.

A wireless communication function of the electronic apparatus 100 may be implemented by using the antenna 1, the wireless communication module 160, the modem processor, the baseband processor, and the like.

The antenna 1 is configured to transmit and receive an electromagnetic wave signal. Each antenna in the electronic apparatus 100 may be configured to cover a single communication frequency band or a plurality of communication frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic apparatus 100. The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 and the wireless communication module 160 of the electronic apparatus 100 are coupled, so that the electronic apparatus 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic apparatus 100 implements a display function by using the GPU, the display 150, the application processor, and the like. The GPU is a microprocessor for image processing, and is connected to the display 150 and the application processor. The GPU is configured to perform mathematical and geometric calculations for graphics rendering. The processor 110 may include one or more GPUs that execute program instructions to generate or change display information.

The display 150 is configured to display an image, a video, and the like. The display 150 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic apparatus 100 may include one or N displays 150, where N is a positive integer greater than 1.

The electronic apparatus 100 may implement a photographing function by using the ISP, the camera 191, the video codec, the GPU, the display 150, the application processor, and the like.

The ISP is configured to process data fed back by the camera 191. For example, during photographing, a shutter is opened, light is transferred to a camera photosensitive element through a lens, an optical signal is converted into an electrical signal, and the camera photosensitive element transfers the electrical signal to the ISP for processing, to convert the electrical signal into an image visible to a naked eye. The ISP may further perform algorithm optimization on noise, and brightness of the image. The ISP may further optimize parameters such as an exposure and a color temperature of a photographing scene. In some embodiments, the ISP may be disposed in the camera 191.

The camera 191 is configured to capture a static image or a video. An object generates an optical image by using the lens and is projected to a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a format like standard RGB (RGB indicates red, green, and blue) or YUV ("Y" indicates luminance (Luminance or Luma), namely, a grayscale value, and "U" and "V" indicate chrominance (Chrominance or Chroma)). In some embodiments, the electronic apparatus 100 may include one or N cameras 191, where N is a positive integer greater than 1.

The digital signal processor is configured to process a digital signal, and may further process another digital signal in addition to a digital image signal. For example, when the electronic apparatus 100 selects a frequency, the digital signal processor is configured to perform Fourier transform or the like on frequency energy.

The video codec is configured to compress or decompress a digital video. The electronic apparatus 100 can support one or more video codecs. Therefore, the electronic apparatus 100 can play or record videos of a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transmission mode between human brain neurons, and may further continuously perform self-learning. Applications such as intelligent cognition of the electronic apparatus 100 can be implemented by using the NPU, such as image recognition, facial recognition, speech recognition, and text understanding.

The memory 120 may be configured to store computer-executable program code. The executable program code includes instructions. The memory 120 may include a program storage area and a data storage area. The program storage area may store an operating system, an application required by at least one function (for example, a sound playing function and an image playing function), and the like. The data storage area may store data (such as audio data and a phone book) and the like created during use of the electronic apparatus 100. In addition, the memory 120 may include a high-speed random access memory, and may further include a nonvolatile memory, for example, at least one magnetic disk storage component, a flash memory component, or a universal flash storage (universal flash storage, UFS). The processor 110 executes various function applications of the electronic apparatus 100 and data processing by running the instructions stored in the memory 120 and/or the instructions stored in the memory disposed in the processor.

The electronic apparatus 100 may implement an audio function by using the audio module 170, the speaker 170A, the receiver 170B, the microphone 170C, the headset jack 170D, the application processor, and the like. For example, playing music, and recording.

The audio module 170 is configured to convert a digital audio signal into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic apparatus 100 may listen to music or answer a handsfree call by using the speaker 170A.

The receiver 170B, also referred to as an "earpiece", is configured to convert an audio electrical signal into a sound signal. When a call is answered or speech information is listened to by using the electronic apparatus 100, the telephone receiver 170B may be put close to a human ear to listen to speech.

The microphone 170C, also referred to as a "mike" or a "voice tube", is configured to convert a sound signal into an electrical signal. When making a call or sending voice information, a user may make a sound by moving a human mouth close to the microphone 170C to input a sound signal into the microphone 170C. At least one microphone 170C may be disposed in the electronic apparatus 100. In some other embodiments, two microphones 170C may be disposed in the electronic apparatus 100, to implement a noise reduction function, in addition to collecting a sound signal. In some other embodiments, three, four, or more microphones 170C may alternatively be disposed in the electronic apparatus 100, to collect a sound signal, implement noise reduction, and identify a sound source, to implement a directional recording function and the like.

The headset jack 170D is configured to connect to a wired headset. The headset jack 170D may be the USB interface 130, a 3.5 mm open mobile terminal platform (open mobile terminal platform, OMTP) standard interface or a cellular telecommunications industry association of the USA (cellular telecommunications industry association of the USA, CTIA) standard interface.

The gyroscope sensor 180A may be configured to determine a motion posture of the electronic apparatus 100. In some embodiments, an angular velocity of the electronic apparatus 100 around three axes (namely, axes x, y, and z) may be determined by using the gyroscope sensor 180A. The gyroscope sensor 180A may be configured to perform image stabilization during photographing. For example, when a shutter is pressed, the gyroscope sensor 180A detects an angle at which the electronic apparatus 100 jitters; and calculates, based on the angle, a distance that needs to be compensated by a lens module, so that a lens cancels the jitter of the electronic apparatus 100 through reverse motion. This implements image stabilization. The gyroscope sensor 180A may be further used in a navigation scenario and a motion sensing game scenario.

The barometric pressure sensor 180B is configured to measure barometric pressure. In some embodiments, the electronic apparatus 100 calculates an altitude by using a barometric pressure value measured by the barometric pressure sensor 180B, to assist in positioning and navigation.

The distance sensor 180C is configured to measure a distance. The electronic apparatus 100 may measure the distance by using infrared or a laser. In some embodiments, in a photographing scenario, the electronic apparatus 100 may measure the distance by using the distance sensor 180C, to implement fast focusing.

The ambient light sensor 180F is configured to sense ambient light luminance. The electronic apparatus 100 may adaptively adjust brightness of the display 150 based on the sensed ambient light luminance. The ambient light sensor 180F may also be configured to automatically adjust white balance during photographing. The ambient light sensor 180F may further cooperate with the optical proximity sensor 180G to detect whether the electronic apparatus 100 is in a pocket, to prevent accidental touch.

The temperature sensor 180D is configured to detect a temperature. In some embodiments, the electronic apparatus 100 executes a temperature processing policy by using the temperature detected by the temperature sensor 180D. For example, when the temperature reported by the temperature sensor 180D exceeds a threshold, the electronic apparatus 100 degrades performance of a processor near the temperature sensor 180D, to reduce power consumption for thermal protection. In some other embodiments, when the temperature is less than another threshold, the electronic apparatus 100 heats the battery 142, to prevent the electronic apparatus 100 from being abnormally powered off due to low temperature. In some other embodiments, when the temperature is less than still another threshold, the electronic apparatus 100 boosts an output voltage of the battery 142 to avoid abnormal shutdown due to a low temperature.

The touch sensor 180E is also referred to as a "touch component". The touch sensor 180E may be disposed on the display 150, and the touch sensor 180E and the display 150 form a touchscreen, which is also referred to as a "touch screen". The touch sensor 180E is configured to detect a touch operation performed on or near the touch sensor. The touch sensor may transfer a detected touch operation to the application processor, to determine a touch event type. A visual output related to the touch operation may be provided on the display 150. In some other embodiments, the touch sensor 180E may alternatively be disposed on a surface of the electronic apparatus 100 in a position different from that of the display 150.

The button 190 includes a power button, a volume button, and the like. The button 190 may be a mechanical button, or may be a touch button. The electronic apparatus 100 may receive button input, and generate button signal input related to user setting and function control of the electronic apparatus 100.

Certainly, the electronic apparatus 100 may further include another functional unit. This is not limited in this embodiment of this application.

The following uses the architecture shown in FIG. 5A as an example to describe the interaction method provided in this embodiment of this application. Units in the following embodiments may have components shown in FIG. 5A. Details are not described again. In addition, actions, terms, and the like in embodiments of this application may be mutually referenced. This is not limited.

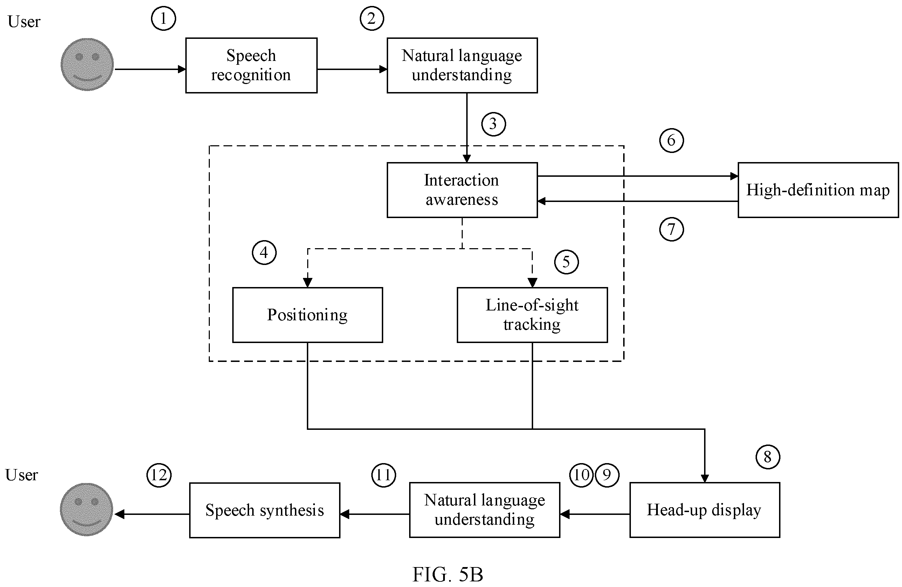

FIG. 5B is a schematic flowchart of an interaction method according to an embodiment of this application. As shown in FIG. 5B, with reference to the structure of the electronic apparatus in FIG. 5A, in a scenario, a target query procedure is described in detail. For example, the target query procedure may be specifically as follows. (1) As described above, a user says: "The left front building looks like a scenic spot. What is it for?". In this case, the microphone 170C in the electronic apparatus 100 converts a sound signal into an electrical signal (for example, an analog audio). (2) The audio module 170 receives the analog audio sent by the microphone 170C, and converts the analog audio into a digital audio signal. The audio module 170 sends the digital audio signal to the processor 110, and the processor 110 may understand semantics of the user based on the digital audio signal, and determine a first keyword entered by the user. (3) The processor 110 triggers target query work based on the first keyword. Specifically, (4) the processor 110 invokes a positioning system of a vehicle to obtain a position and a traveling direction of the vehicle. (5) The processor 110 invokes a camera in the vehicle to track a line of sight of the user. (6) The processor 110 invokes a high-definition map application based on the position and the traveling direction of the vehicle to search for a candidate geographical marker on the line of sight of the user. (7) The high-definition map application returns the candidate geographical marker to the processor 110. (8) The processor 110 invokes a head-up display HUD to mark and display the candidate geographical marker, and present an image on a front windshield of the vehicle. (9) The user says: "Select the building in the middle...". The foregoing (1) and (2) may be repeatedly performed. (10) The processor 110 selects a target geographical marker from the candidate geographical marker based on a second key word. (11) the processor 110 sends information about the target geographical marker to the audio module 170. The audio module 170 converts the information about the target geographical marker into an audio electrical signal, and sends the audio electrical signal to the receiver 170B. (12) The receiver 170B converts the audio electrical signal into a sound signal. In this way, the user may answer a voice through the receiver 170B, for example, "The building in the middle you selected is a science and technology museum...".

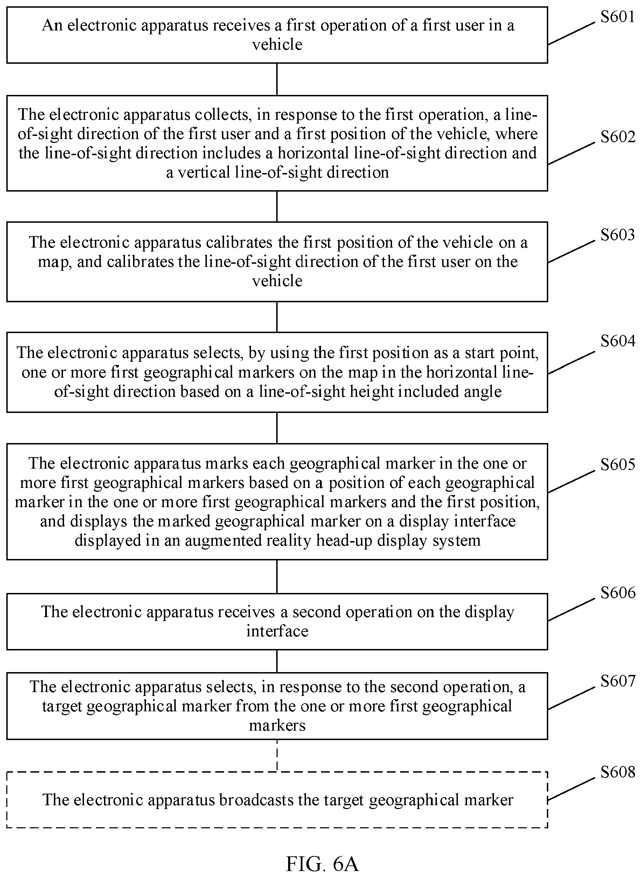

FIG. 6A is a schematic flowchart of a part of an interaction method according to an embodiment of this application. As shown in FIG. 6A, an example in which the method is executed by an electronic apparatus is used for description. The method may include the following steps.

S601: The electronic apparatus receives a first operation of a first user in a vehicle.

The first user may include a driver and a passenger. This is not specifically limited in this embodiment of this application. The first operation may include any one or more of a voice operation, a button operation, a gesture operation, and a gaze operation. The gaze operation may be understood as an operation in which eyes of the user focus on a fixed position for preset time.

For example, the electronic apparatus is an entire vehicle, and eyes of the first user (for example, a driver) in the vehicle gaze at the building C shown in FIG. 2. A first image collection apparatus in the vehicle collects eye data (or referred to as human eye data) of the first user. For example, the first image collection apparatus may be a visual camera, and the visual camera captures human eye data of the first user.

S602: The electronic apparatus collects, in response to the first operation, a line-of-sight direction of the first user and a first position of the vehicle, where the line-of-sight direction includes a horizontal line-of-sight direction and a vertical line-of-sight direction.

That the electronic apparatus collects the line-of-sight direction of the first user may be understood as: the first image collection apparatus on the electronic apparatus collects the eye data of the first user, and a processor on the electronic apparatus determines the line-of-sight direction of the first user based on the eye data collected by the first image collection apparatus. For example, as described above, the visual camera captures eye data of the first user, and the vehicle processor in the vehicle determines a line-of-sight direction of a driver based on the human eye data.

The foregoing example is still used. The visual camera in the vehicle sends the collected human eye data to the vehicle processor, and the vehicle processor determines the line-of-sight direction of the driver by using an in-vehicle camera line-of-sight tracking algorithm. Specifically, first, in a vehicle coordinate system, the vehicle processor in the vehicle calibrates the camera in the vehicle in the vehicle coordinate system. Then, the vehicle processor receives the human eye data sent by the visual camera. The vehicle processor determines a line-of-sight direction of the driver based on the human eye data.

That the electronic apparatus collects the first position of the vehicle may be understood as that a second image collection apparatus on the electronic apparatus collects the first position of the vehicle. For example, the second image collection apparatus is a camera outside the vehicle, and the camera collects a first position of the vehicle. The first position may include a direction of the vehicle, a geographical position of the vehicle, surrounding information of the vehicle, and the like.

After the electronic apparatus performs S602, the electronic apparatus may select one or more first geographical markers based on the first position, the horizontal line-of-sight direction, and a line-of-sight height included angle. A specific implementation is shown in the following S603 and S604. Details are as follows.

S603: The electronic apparatus calibrates the first position of the vehicle on a map, and calibrates the line-of-sight direction of the first user on the vehicle.

An application used to display the map is stored on the electronic apparatus. The electronic apparatus calibrates the first position of the vehicle on the map, and the map includes information such as height information of an object, position information of the vehicle, and a traveling direction of the vehicle. In other words, the position and the traveling direction of the vehicle are displayed on the map. The map may be a three-dimensional (3-dimension, 3D) map. Certainly, the map may alternatively be a two-dimensional (2-dimension, 2D) map with height information. Certainly, the map may alternatively be another map with height information. This is not specifically limited in this embodiment of this application.

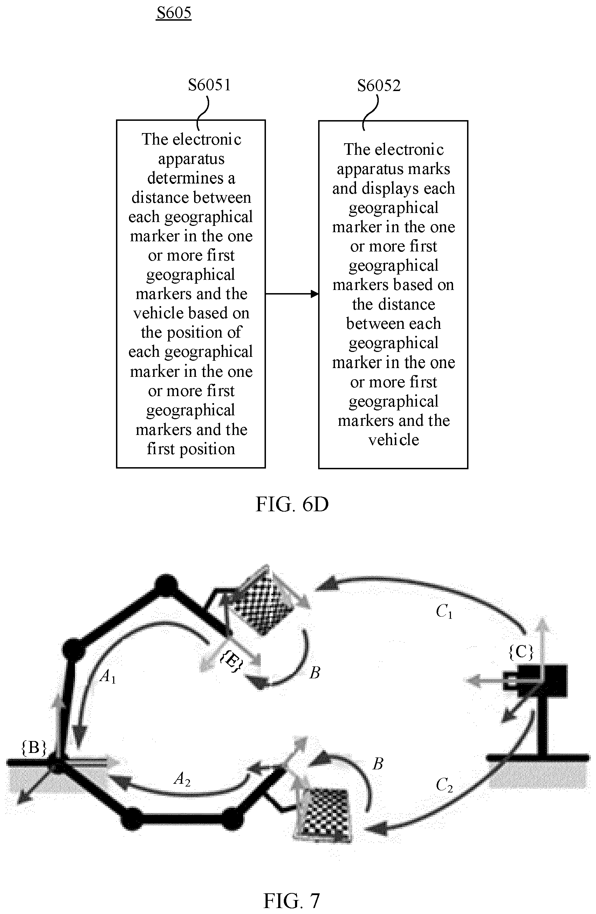

In a specific implementation, the electronic apparatus calibrates the camera in the vehicle on the vehicle. For example, as shown in FIG. 7, {C} is a camera (camera), a calibration board of an origin of a coordinate system performs transformation matrix C1 or C2 to obtain a calibration board {E}, B is a matrix of a change of a position and a posture of a front end of a mechanical arm relative to an elbow, namely, an orthogonal Euclidean group SE3 and 6 degrees of freedom, {E} is the elbow (elbow), A1 or A2 is a matrix of a change of a position and a posture of the elbow relative to a base, and {B} is the base (base). In conclusion, the electronic apparatus may calibrate the camera in the vehicle on the base of the vehicle based on an arrow direction shown in FIG. 7. In this way, the camera in the vehicle collects the eye data of the first user. The electronic apparatus obtains the line-of-sight direction of the first user based on the eye data of the first user. The electronic apparatus then calibrates the line-of-sight direction of the first user obtained in the foregoing step on the vehicle. For example, the camera in the vehicle may be a digital video recorder (digital video recorder, DVR), and the vehicle processor may control the DVR, so that the DVR is converted into an eyeball angle of the first user for image collection, to detect a target.

S604: The electronic apparatus selects, by using the first position as a start point, the one or more first geographical markers on the map in the horizontal line-of-sight direction based on the line-of-sight height included angle.

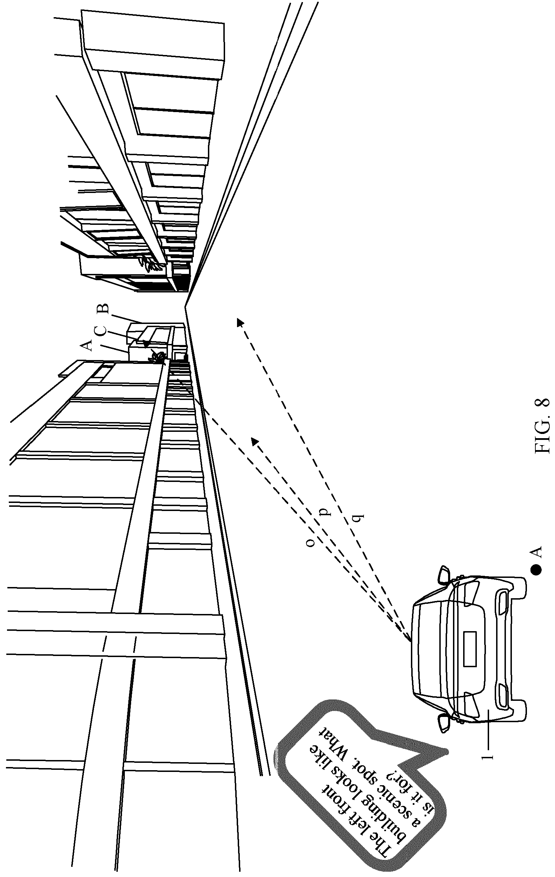

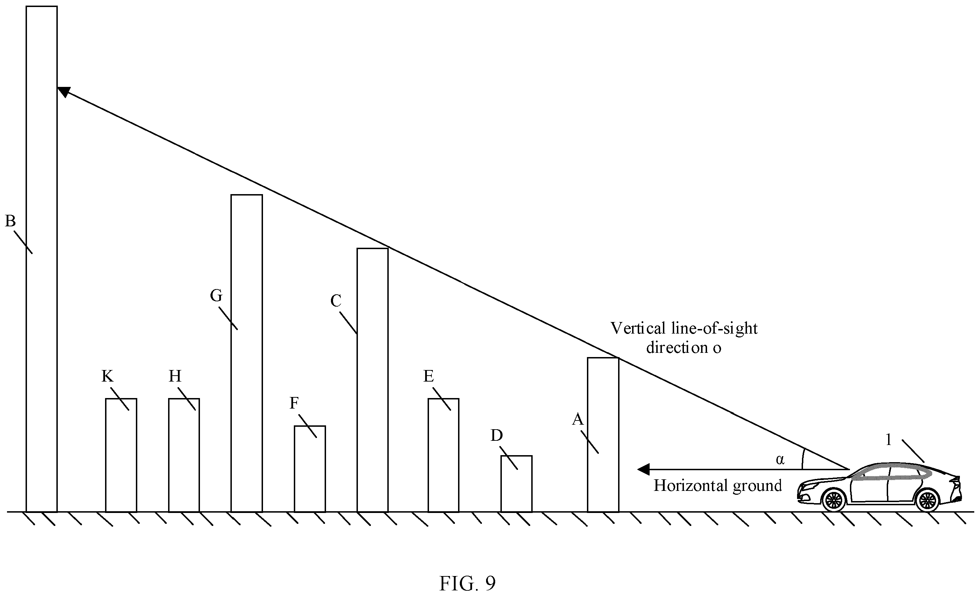

The line-of-sight height included angle is an included angle between the vertical line-of-sight direction and a horizontal ground. For example, the vertical line-of-sight direction is o shown in FIG. 8. The horizontal line-of-sight direction is p shown in FIG. 8. A traveling direction of a vehicle 1 is q shown in FIG. 8. FIG. 9 is a simplified diagram of FIG. 8. As shown in FIG. 9, an included angle between the vertical line-of-sight direction o and the horizontal ground is α.

As described above, the vehicle processor may control the DVR (digital video recorder) based on the line-of-sight direction of the first user, so that the DVR is converted into an eyeball angle of the first user for image collection, to detect a target. For example, buildings in a line-of-sight (horizontal) direction may be determined based on a traveling direction and a line-of-sight direction of a vehicle on a map, and blocked buildings are calculated and eliminated by sorting buildings, and then validity of visible buildings is determined one by one, for example, the trigonometric function is used to calculate a building height based on a distance between a building and a vehicle and an included angle between a line-of-sight (vertical) direction and the ground, and the building height is compared with an actual building height. If the actual building height is inconsistent with the calculated height, a building is eliminated. If the actual building height is consistent with the calculated height, the building is placed in a building set, namely, the one or more first geographical markers. Specific implementations are as follows.

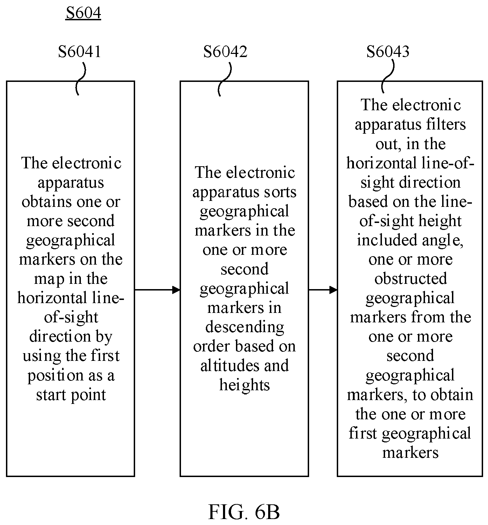

In a specific implementation, a preset condition may include a notification. As shown in FIG. 6B, S604 includes S6041, S6042, and S6043. S6041, S6042, and S6043 may be specifically implemented as follows:
S6041: The electronic apparatus obtains one or more second geographical markers on the map in the horizontal line-of-sight direction by using the first position as a start point.

For example, the one or more second geographical markers shown in FIG. 9 are obtained in the horizontal line-of-sight direction p by using the first position (a position A shown in FIG. 8) of the vehicle 1 as a start point. The one or more second geographical markers may include a building A, a building B, a building C, a building D, a building E, a building F, a building G, a building H, and a building K.

S6042: The electronic apparatus sorts geographical markers in the one or more second geographical markers in descending order based on altitudes and heights.

After the electronic apparatus obtains the one or more second geographical markers, the electronic apparatus may obtain information about each geographical marker in the one or more second geographical markers, for example, information such as a position, a height, and an altitude. The electronic apparatus may sort geographical markers in the one or more second geographical markers based on altitudes and heights.

S6043: The electronic apparatus filters out, in the horizontal line-of-sight direction based on the line-of-sight height included angle, one or more obstructed geographical markers from the one or more second geographical markers, to obtain the one or more first geographical markers.

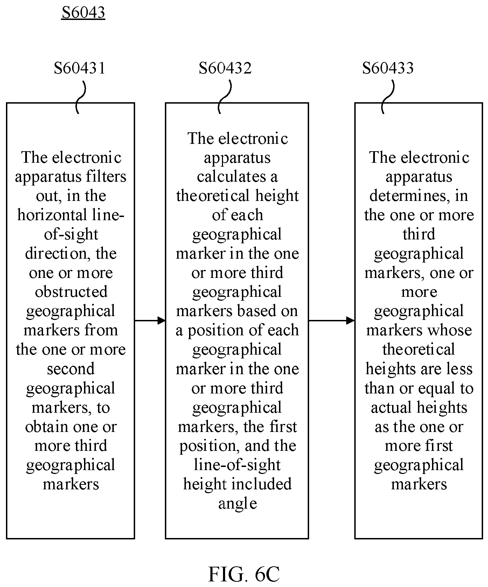

The electronic apparatus may filter out the one or more obstructed geographical markers from the one or more second geographical markers based on the line-of-sight height included angle, to obtain the one or more first geographical markers. Specifically, as shown in FIG. 6C, S6043 includes S60431, S60432, and S60433. S60431, S60432, and S60433 may be specifically implemented as follows:
S60431: The electronic apparatus filters out, in the horizontal line-of-sight direction, the one or more obstructed geographical markers from the one or more second geographical markers, to obtain one or more third geographical markers.

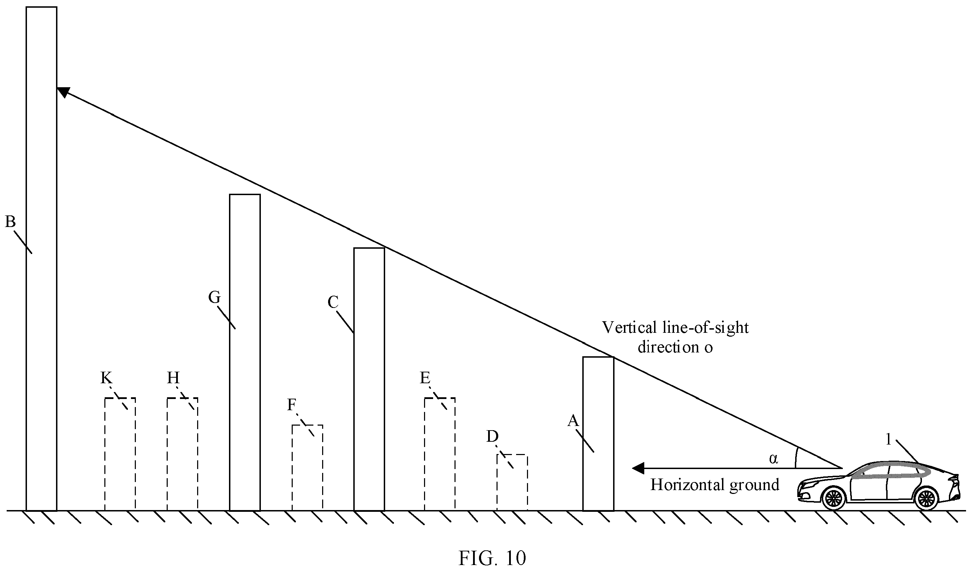

The electronic apparatus may obtain a height and an altitude of each geographical marker in the one or more second geographical markers from another device, or may obtain a height and an altitude of each geographical marker in the one or more second geographical markers from another application (for example, a high-definition map application). This is not specifically limited in this embodiment of this application. After the electronic apparatus obtains the height and the altitude of each geographical marker in the one or more second geographical markers, the electronic apparatus may further determine the one or more obstructed geographical markers in the one or more second geographical markers based on the height, the altitude, and an arrangement order of each geographical marker in the one or more second geographical markers. For example, in FIG. 9, the electronic apparatus may determine that the building D, the building E, the building F, the building H, and the building K in the one or more second geographical markers are obstructed geographical markers, and filter out these geographical markers. Finally, the electronic apparatus forms the one or more third geographical markers by using the remaining geographical markers in the one or more second geographical markers. For example, as shown in FIG. 10, the one or more third geographical markers may include a building A, a building B, a building C, and a building G.

S60432: The electronic apparatus calculates a theoretical height of each geographical marker in the one or more third geographical markers based on a position of each geographical marker in the one or more third geographical markers, the first position, and the line-of-sight height included angle.

As described above, the electronic apparatus may obtain the position of each geographical marker in the one or more third geographical markers from another application (for example, a high-definition map application). The electronic apparatus determines a distance between the vehicle and each geographical marker in the one or more third geographical markers based on the position of each geographical marker in the one or more third geographical markers and the first position of the vehicle. The electronic apparatus may calculate the theoretical height of each geographical marker in the one or more third geographical markers based on the distance between the vehicle and each geographical marker in the one or more third geographical markers and the line-of-sight height included angle α. For example, Tan α=theoretical height of the geographical marker/distance between the vehicle and the geographical marker.

S60433: The electronic apparatus determines, in the one or more third geographical markers, one or more geographical markers whose theoretical heights are less than or equal to actual heights as the one or more first geographical markers.

Because the electronic apparatus may obtain an actual height of each geographical marker in the one or more third geographical markers, herein, the electronic apparatus may determine, in the one or more third geographical markers, the geographical markers whose theoretical heights are less than or equal to actual heights as the one or more first geographical markers. For example, as shown in FIG. 10, a theoretical height of the building G obtained by the electronic apparatus through calculation is greater than an actual height of the building G. This result is inconsistent with fact. Therefore, the electronic apparatus filters out the building G. Therefore, the obtained first geographical markers include the building A, the building B, and the building C.

In another scenario, when a quantity of geographical markers in the one or more first geographical markers is greater than a preset value, the electronic apparatus filters out, based on a second preset sorting of the geographical markers in the one or more first geographical markers, a geographical marker whose ranking is greater than a specified ranking from the one or more first geographical markers. The second preset sorting may be described as the foregoing first preset sorting, and details are not described herein again.

For example, it is assumed that a specified order is 3, and a preset value is 5. The quantity of geographical markers in the one or more first geographical markers is greater than 5, and the electronic apparatus may filter out, based on rankings of these geographical markers, a geographical marker whose ranking is greater than 3 from the one or more first geographical markers, that is, top 3 geographical markers are retained in the one or more first geographical markers.

S605: The electronic apparatus marks each geographical marker in the one or more first geographical markers based on a position of each geographical marker in the one or more first geographical markers and the first position, and displays the marked geographical marker on a display interface displayed in an augmented reality head-up display system. Augmented reality head-up display is a virtual 3D world, and the virtual 3D world and a map are calibrated to form a parallel world.

The marking and displaying may be understood as marking and displaying the geographical marker. The marking and displaying may include any one or more of color deepening displaying, contour displaying, contour filling displaying, and label displaying.

The display interface may be understood as an interface presented by an image formed by the augmented reality head-up display system on a front windshield of the vehicle.

That the electronic apparatus marks each geographical marker in the one or more first geographical markers based on a position of each geographical marker in the one or more first geographical markers and the first position may be specifically implemented as follows: The electronic apparatus marks each geographical marker based on the position of each geographical marker in the one or more first geographical markers and the first position of the vehicle. For example, as shown in FIG. 3, each geographical marker is circled and numbered, and a building that passes through the front windshield of the vehicle is highlighted by using the augmented reality head-up display system. Certainly, in this embodiment of this application, a specific implementation of displaying of each geographical marker may alternatively be displaying and highlighting (or enhancing display) of each geographical marker, or the like.

In a specific implementation, S605: The electronic apparatus marks each geographical marker in the one or more first geographical markers based on the position of each geographical marker in the one or more first geographical markers and the first position. Specifically, as shown in FIG. 6D, S605 includes S6051 and S6052. S6051 and S6052 may be specifically implemented as follows:
S6051: The electronic apparatus determines a distance between each geographical marker in the one or more first geographical markers and the vehicle based on the position of each geographical marker in the one or more first geographical markers and the first position.

As described above, the electronic apparatus may obtain the position of each geographical marker in the one or more first geographical markers and the first position of the vehicle. For a specific obtaining manner, reference may be made to the foregoing related description, and details are not described herein. The electronic apparatus determines a distance between the vehicle and each geographical marker based on the position of each geographical marker in the one or more first geographical markers and the first position of the vehicle. In other words, as the vehicle travels, the distance between the vehicle and each geographical marker changes in real time.

S6052: The electronic apparatus marks and displays each geographical marker in the one or more first geographical markers based on the distance between each geographical marker in the one or more first geographical markers and the vehicle.

The electronic apparatus may mark and display each geographical marker in the one or more first geographical markers based on a real-time changing distance between the vehicle and each geographical marker. In other words, the electronic apparatus ensures that, regardless of a position at which the vehicle travels, a mark of each geographical marker in the one or more first geographical markers can be accurately displayed on each geographical marker that passes through the windshield.

In some embodiments, after S605, an interaction method provided in this embodiment of this application may further include: The electronic apparatus numbers each geographical marker in the one or more first geographical markers based on a first preset sorting. The first preset sorting may include a popularity sorting, a height sorting, a distance sorting, and the like. The popularity may include preference popularity, search popularity, and the like. In this embodiment of this application, the electronic apparatus may perform numbering based on a popularity sorting of the geographical markers in the one or more first geographical markers. When numbering is displayed on the windshield of the vehicle, the user may be obviously prompted, so that the user may perform selection with reference to the numbering.

S606: The electronic apparatus receives a second operation on the display interface.

The second operation may include at least one of the following: a voice operation, a touch operation, a button operation (for example, tapping a main control button or tapping a button on a steering wheel), a gesture operation (for example, a pointing direction of a finger), a gaze operation (for example, gazing at a target for long time), and the like.

For example, as described above, the augmented reality head-up display system displays a mark on a building that passes through the front windshield of the vehicle. The user in the vehicle may see each geographical marker (namely, a building) in the one or more first geographical markers through the front windshield, and at the same time, a mark is presented on a corresponding building on the windshield. The user may perform the second operation on the display interface. For example, the user may point to a building on the display interface. Specifically, the second operation may include a first gesture operation and a second gesture operation. The first gesture operation may be used to highlight a specified geographical marker. The second gesture operation may be used to determine a target geographical marker. For another example, the user may describe a building on the display interface by voice. As shown in FIG. 2, the user in the vehicle says: "Select the building in the middle...". In this case, the electronic apparatus receives the operation of the user.

S607: The electronic apparatus selects, in response to the second operation, the target geographical marker from the one or more first geographical markers.

The electronic apparatus may select the target geographical marker from the one or more first geographical markers based on the second operation. The foregoing example is still used. The electronic apparatus may identify a voice of the user based on a voice operation of the user, and analyze key information. The electronic apparatus searches, based on the key information, the one or more first geographical markers for a geographical marker that matches the key information, and uses the geographical marker as the target geographical marker. For example, the voice of the user is "selecting the building in the middle... ", and the electronic apparatus recognizes the voice of the user, and may wait for text information of "selecting the building in the middle...". The electronic apparatus may extract a keyword from the text information. The keyword may include: "select", "middle", "the building", "the building in the middle", and the like. The electronic apparatus may search, based on the foregoing key word, the one or more first geographical markers for a geographical marker arranged in the middle, use the geographical marker as the target geographical marker, and highlight the target geographical marker, that is, highlight the building C shown in FIG. 4.

The foregoing example is still used. The first gesture operation may be that the user points to a building shown in FIG. 3 and points between buildings. When the user points to the building shown in FIG. 3 and points between the buildings, the electronic apparatus may receive the first gesture operation of the user. For example, a camera in the vehicle 1 may collect a gesture of the user. The electronic apparatus determines, in response to the first gesture operation, a geographical marker specified by the user, and displays, in a color deepening manner, the geographical marker specified by the user. The second gesture operation may be that the user points to the building C shown in FIG. 3 for preset duration. The preset duration may be 3 seconds, 5 seconds, or 10 seconds. When the user points to the building C shown in FIG. 3 for preset duration, the electronic apparatus may receive the second gesture operation of the user. The electronic apparatus determines, in response to the second gesture operation, the one or more first geographical markers as the target geographical marker. For example, as shown in FIG. 4, the electronic apparatus may determine, based on the second gesture operation of the user, that the geographical marker specified by the user is the building C. The electronic apparatus displays the building C in bold, which is certainly not limited thereto, and may further display the building C in a color (for example, display in red).

In some embodiments, considering that the user may be a driver, to avoid affecting vehicle driving by the user, the interaction method provided in this embodiment of this application may further include the following steps.

S608: The electronic apparatus broadcasts the target geographical marker.

It may be understood that the electronic apparatus broadcasts the target geographical marker in a voice form. Specifically, the electronic apparatus may broadcast the target geographical marker in the following manner: Manner 1: The electronic apparatus has a voice broadcasting module, for example, a microphone. The electronic apparatus may convert the target geographical marker into a voice signal, and broadcast the voice signal through the microphone. Manner 2: The electronic apparatus does not have a voice broadcasting module. The electronic apparatus may send information including the target geographical marker to the voice broadcasting module, and the voice broadcasting module receives the information, converts the information into a voice signal, and broadcasts the voice signal. In this way, the user can directly listen to a target query result of the electronic apparatus. This ensures driving safety.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

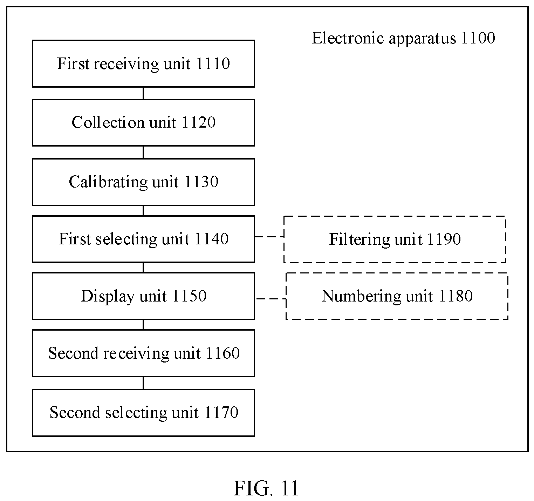

An embodiment of this application further provides an apparatus configured to implement any one of the foregoing methods. For example, an apparatus is provided, including units (or means) configured to implement the steps performed by the electronic apparatus in the foregoing method S601 to S608. For another example, another apparatus is further provided, including units (or means) configured to implement the steps performed by the vehicle in the foregoing methods S601 to S608. For example, FIG. 11 is a diagram of an electronic apparatus according to an embodiment of this application. An electronic apparatus 1100 may include:
a first receiving unit 1110, configured to receive a first operation of a first user in a vehicle, where for example, the first receiving unit 1110 may perform the foregoing step S601, and the first receiving unit 1110 may be the touch sensor 180E shown in FIG. 5A;
a collection unit 1120, configured to collect, in response to the first operation, a line-of-sight direction of the first user and a first position of the vehicle, where the line-of-sight direction includes a horizontal line-of-sight direction and a vertical line-of-sight direction; for example, the collection unit 1120 may perform the foregoing step S602; and the collection unit 1120 may be the camera 191 shown in FIG. 5A;
a calibrating unit 1130, configured to calibrate the first position of the vehicle on a map, and calibrate the line-of-sight direction of the first user on the vehicle, where for example, the calibrating unit 1130 may perform step S603, and the calibrating unit 1130 may be the processor 110 shown in FIG. 5A;
a first selecting unit 1140, configured to select, by using the first position as a start point, one or more first geographical markers on the map in the horizontal line-of-sight direction based on a line-of-sight height included angle, where the line-of-sight height included angle is an included angle between the vertical line-of-sight direction and a horizontal ground; for example, the first selecting unit 1140 may perform the foregoing step S604; and the first selecting unit 1140 may be the processor 110 shown in FIG. 5A;
a display unit 1150, configured to: mark each geographical marker in the one or more first geographical markers based on a position of each geographical marker in the one or more first geographical markers and the first position, and display the marked geographical marker on a display interface displayed in an augmented reality head-up display system, where the augmented reality head-up display is a virtual 3D world, and the virtual 3D world and a map are calibrated to form a parallel world; for example, the display unit 1150 may perform the foregoing step S605; and the display unit 1150 may be the display 150 shown in FIG. 5A;
a second receiving unit 1160, configured to receive a second operation on the display interface; for example, the second receiving unit 1160 may perform the step S606; and the second receiving unit 1160 may be the touch sensor 180E shown in FIG. 5A; and
a second selecting unit 1170, configured to select, in response to the second operation, a target geographical marker from the one or more first geographical markers; for example, the second selecting unit 1170 may perform the foregoing step S607; and the second selecting unit 1170 may be the processor 110 shown in FIG. 5A.

In a specific implementation, the display unit 1150 is further configured to:
determine a distance between each geographical marker in the one or more first geographical markers and the vehicle based on a position of each geographical marker in the one or more first geographical markers and the first position; and
mark and display each geographical marker in the one or more first geographical markers based on the distance between each geographical marker in the one or more first geographical markers and the vehicle.

In a specific implementation, the first selecting unit 1140 is further configured to:
obtain one or more second geographical markers on the map in the horizontal line-of-sight direction by using the first position as a start point;
sort geographical markers in the one or more second geographical markers in descending order based on altitudes and heights; and
filter out, in the horizontal line-of-sight direction based on the line-of-sight height included angle, one or more obstructed geographical markers from the one or more second geographical markers, to obtain the one or more first geographical markers.

In a specific implementation, the first selecting unit 1140 is further configured to:
filter out, in the horizontal line-of-sight direction, the one or more obstructed geographical markers from the one or more second geographical markers, to obtain one or more third geographical markers;
calculate a theoretical height of each geographical marker in the one or more third geographical markers based on a position of each geographical marker in the one or more third geographical markers, the first position, and the line-of-sight height included angle; and
determine, in the one or more third geographical markers, one or more geographical markers whose theoretical heights are less than or equal to actual heights as the one or more first geographical markers.

In some embodiments, the electronic apparatus 1100 further includes:
a numbering unit 1180, configured to number each geographical marker in the one or more first geographical markers based on a first preset sorting. For example, the numbering unit 1180 may be the processor 110 shown in FIG. 5A.

In some embodiments, the electronic apparatus 1100 further includes:
a filtering unit 1190, configured to: when a quantity of geographical markers in the one or more first geographical markers is greater than a preset value, filter out, based on a second preset sorting of the geographical markers in the one or more first geographical markers, a geographical marker whose ranking is greater than a specified ranking from the one or more first geographical markers. For example, the filtering unit 1190 may be the processor 110 shown in FIG. 5A.

In a specific implementation, the second operation includes at least one of the following: a voice operation, a touch operation, a button operation, a gesture operation, and a gaze operation.

In a specific implementation, the second operation includes a gesture operation, and the second selecting unit 1170 is further configured to:
perform, in response to a first gesture operation, color deepening displaying on a to-be-selected geographical marker in the one or more first geographical markers; and
determine, in response to a second gesture operation, the to-be-selected geographical marker as the target geographical marker.

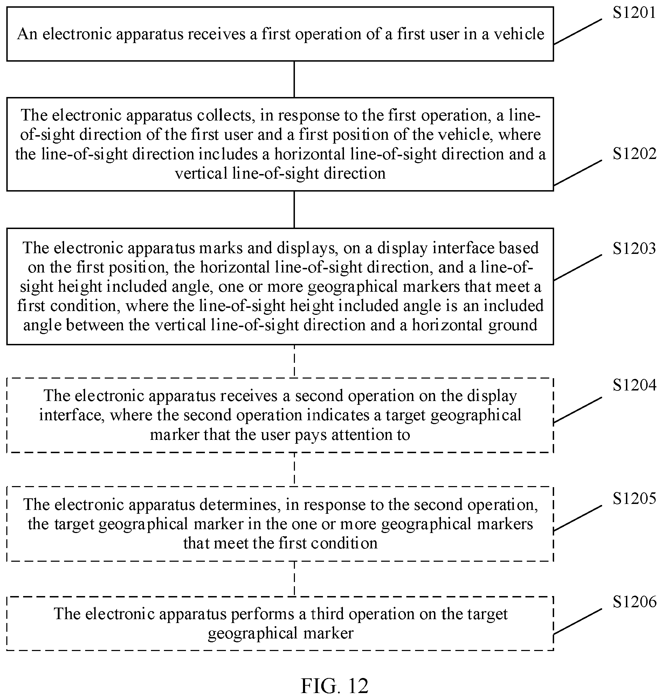

In some other embodiments, an embodiment of this application further provides an interaction method. FIG. 12 is a schematic flowchart of a part of another interaction method according to an embodiment of this application. As shown in FIG. 12, an example in which the method is executed by an electronic apparatus is used for description. The method may include the following steps.

S1201: The electronic apparatus receives a first operation of a first user in a vehicle.

For specific implementation of this step, refer to related descriptions of S601. Details are not described herein again.

S1202: The electronic apparatus collects, in response to the first operation, a line-of-sight direction of the first user and a first position of the vehicle, where the line-of-sight direction includes a horizontal line-of-sight direction and a vertical line-of-sight direction.

For specific implementation of this step, refer to related descriptions of S602. Details are not described herein again.

S1203: The electronic apparatus marks and displays, on a display interface based on the first position, the horizontal line-of-sight direction, and a line-of-sight height included angle, one or more geographical markers that meet a first condition, where the line-of-sight height included angle is an included angle between the vertical line-of-sight direction and a horizontal ground.

The geographical markers may be understood as a landmark building, for example, a department store, a skyscraper, a bridge, or a scenic spot building.

The marking and displaying may include at least one of the following: color deepening displaying, contour displaying, contour filling displaying, and label displaying.

The first condition may include: in the horizontal line-of-sight direction and within a range of the line-of-sight height included angle; or not obstructed in the horizontal line-of-sight direction and within a range of the line-of-sight height included angle, and a theoretical height less than or equal to an actual height.

For example, for specific implementation of this step, refer to related descriptions of S603 to S605. Details are not described herein again.

In some embodiments, the interaction method provided in this embodiment of this application further includes: after S1203, the method further includes: numbering the one or more first geographical markers based on a first preset sorting. For details, refer to the foregoing related description. Details are not described herein again.

In some embodiments, the interaction method provided in this embodiment of this application further includes:

S1204: The electronic apparatus receives a second operation on the display interface, where the second operation indicates a target geographical marker that the user pays attention to.

The second operation includes at least one of the following: a voice operation, a touch operation, a button operation, a gesture operation, and a gaze operation.

For specific implementation of this step, refer to related descriptions of S606. Details are not described herein again.

S1205: The electronic apparatus determines, in response to the second operation, the target geographical marker in the one or more geographical markers that meet the first condition.

For example, the second operation includes the gesture operation, and S1205 may be specifically: The electronic apparatus performs, in response to a first gesture operation, color deepening displaying on a to-be-selected geographical marker in the one or more geographical markers that meet the first condition; and the electronic apparatus determines, in response to a second gesture operation, the to-be-selected geographical marker as the target geographical marker.

For specific implementation of this step, refer to related descriptions of S607. Details are not described herein again.

S1206: The electronic apparatus performs a third operation on the target geographical marker.

The third operation includes at least one of the following: broadcasting, navigation, and information pushing. For example, the electronic apparatus broadcasts, pushes, and the like information about the target geographical marker. Alternatively, the electronic apparatus performs navigation by using the first position of the vehicle as a start point and using a position of the target geographical marker as an end point.

For example, for specific implementation of this step, refer to related descriptions of S608. Details are not described herein again.

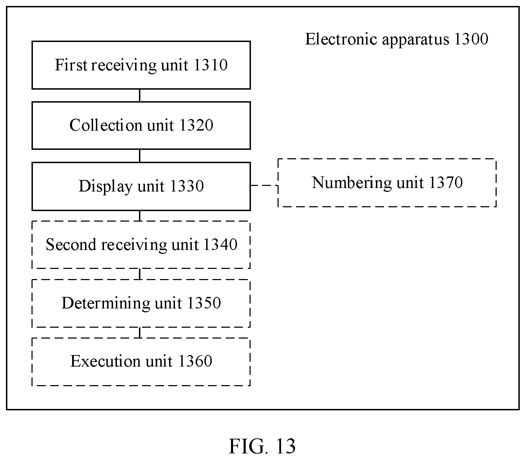

An embodiment of this application further provides an apparatus configured to implement any one of the foregoing methods. For example, an apparatus is provided, including units (or means) configured to implement the steps performed by the electronic apparatus in the foregoing method S1201 to S1206. For another example, another apparatus is further provided, including units (or means) configured to implement the steps performed by the vehicle in the foregoing methods S1201 to S1206. For example, FIG. 13 is a diagram of an electronic apparatus according to an embodiment of this application. An electronic apparatus 1300 may include:
a first receiving unit 1310, configured to receive a first operation of a first user in a vehicle, where for example, the first receiving unit 1310 may perform the foregoing step S1201, and the first receiving unit 1310 may be the touch sensor 180E shown in FIG. 5A;
a collection unit 1320, configured to collect, in response to the first operation, a line-of-sight direction of the first user and a first position of the vehicle, where the line-of-sight direction includes a horizontal line-of-sight direction and a vertical line-of-sight direction; for example, the collection unit 1320 may perform the foregoing step S1202; and the collection unit 1320 may be the camera 191 shown in FIG. 5A;
a display unit 1330, configured to mark and display, on a display interface based on the first position, the horizontal line-of-sight direction, and a line-of-sight height included angle, one or more geographical markers that meet a first condition, where the line-of-sight height included angle is an included angle between the vertical line-of-sight direction and a horizontal ground; for example, the display unit 1330 may perform the step of S1203; and the display unit 1330 may be the processor 110 shown in FIG. 5A and the display 150 shown in FIG. 5A.

In some embodiments, the electronic apparatus 1300 further includes:
a second receiving unit 1340, configured to receive a second operation on the display interface, where the second operation indicates a target geographical marker that the user pays attention to; for example, the second receiving unit 1340 may perform the foregoing step S1204; and the second receiving unit 1340 may be the touch sensor 180E shown in FIG. 5A;
a determining unit 1350, configured to determine, in response to the second operation, the target geographical marker in the one or more geographical markers that meet the first condition, where for example, the determining unit 1350 may perform the step S1205; and the determining unit 1350 may be the processor 110 shown in FIG. 5A; and
an execution unit 1360, configured to perform a third operation on the target geographical marker, where for example, the execution unit 1360 may perform the foregoing step S1206, and the execution unit 1360 may be the processor 110 shown in FIG. 5A and the microphone 170C shown in FIG. 5A.

In a specific implementation, the first condition includes: in the horizontal line-of-sight direction and within a range of the line-of-sight height included angle; or not obstructed in the horizontal line-of-sight direction and within a range of the line-of-sight height included angle, and a theoretical height less than or equal to an actual height.

In a specific implementation, the marking and displaying includes at least one of the following: color deepening displaying, contour displaying, contour filling displaying, and label displaying.

In some embodiments, the electronic apparatus further includes: a numbering unit 1370, configured to number first geographical markers based on a first preset sorting. For example, the numbering unit 1370 may be the processor 110 shown in FIG. 5A.

In a specific implementation, the second operation includes at least one of the following: a voice operation, a touch operation, a button operation, a gesture operation, and a gaze operation.

In a specific implementation, the second operation includes the gesture operation, and the determining unit is further configured to: perform, in response to a first gesture operation, color deepening displaying on a to-be-selected geographical marker in the one or more geographical markers that meet the first condition; and determine, in response to a second gesture operation, the to-be-selected geographical marker as the target geographical marker.

In a specific implementation, the third operation includes at least one of the following: broadcasting, navigation, and information pushing.

It should be understood that division of the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having an instruction reading and running capability, for example, a central processing unit CPU, a microprocessor, a graphics processing unit GPU (which may be understood as a microprocessor), or a digital signal processor DSP. In another implementation, the processor may implement a specific function by using a logical relationship of a hardware circuit, and the logical relationship of the hardware circuit is fixed or reconfigurable. For example, the processor is a hardware circuit implemented by an application-specific integrated circuit ASIC or a programmable logic device PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit NPU tensor processing unit (Tensor Processing Unit, TPU) or a deep learning processing unit (Deep learning Processing Unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

Optionally, in this possible design, all related content of the steps related to the electronic apparatus in the method embodiments shown in FIG. 1 to FIG. 10 and FIG. 12 may be cited in function descriptions of corresponding function modules. Details are not described herein again. The electronic apparatus in this possible design is configured to perform functions of the electronic apparatus in the interaction methods shown in FIG. 1 to FIG. 10 and FIG. 12. Therefore, a same effect as the foregoing interaction methods can be achieved.

An embodiment of this application provides an electronic apparatus, including a processor and a memory. The memory is coupled to the processor, the memory is configured to store computer program code, and the computer program code includes computer instructions. When the processor reads the computer instructions from the memory, the electronic apparatus is enabled to execute the interaction methods shown in FIG. 6A to FIG. 6D and FIG. 12.

The electronic apparatus may include different product forms in a vehicle field, for example, a vehicle-mounted chip, a vehicle-mounted apparatus (for example, an in-vehicle infotainment, a vehicle-mounted computer, or a head-up display (head-up display, HUD)), an entire vehicle, or a server (virtual or physical).

For example, the electronic apparatus is a vehicle. An embodiment of this application provides a vehicle, including a processor and a memory, where the memory is coupled to the processor, the memory is configured to store computer program code, and the computer program code includes a computer instruction. When the processor reads the computer instruction from the memory, an electronic apparatus is enabled to execute the interaction methods shown in FIG. 6A to FIG. 6D and FIG. 12.

An embodiment of this application provides a vehicle, including the electronic apparatuses shown in FIG. 11 and FIG. 13.

According to a computer program product provided in this embodiment of this application, when the computer program product runs on a computer, the computer is enabled to perform the interaction methods shown in FIG. 6A to FIG. 6D and FIG. 12.

An embodiment of this application provides a computer-readable storage medium, including computer instructions. When the computer instructions are run on a terminal, a network device is enabled to perform the interaction methods shown in FIG. 6A to FIG. 6D and FIG. 12.

An embodiment of this application provides a chip system, including one or more processors. When the one or more processors execute instructions, the one or more processors are enabled to perform the interaction methods shown in FIG. 6A to FIG. 6D and FIG. 12.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

The following terms "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

In embodiments of this application, a word "example", "for example", or the like is used to give an example, an illustration, or a description. Any embodiment or design solution described as "example" or "for example" in embodiments of this application should not be explained as being more or having more advantages than another embodiment or design solution. Specifically, use of a word like "example" or "for example" is intended to present a related concept in a specific manner.

It may be understood that, to implement the foregoing functions, the communication device includes corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed in a manner of hardware or computer software driving hardware depends on a specific application and a design constraint of the technical solution. A person skilled in the art may use different methods to implement the described functions for each particular application, but it should not be considered that the implementation goes beyond the scope of embodiments of this application.

In this embodiment of this application, the communication device and the like may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that, in embodiments of this application, module division is an example, and is merely a logical function division. In actual implementation, another division manner may be used.

The foregoing descriptions about implementations allow a person skilled in the art to understand that, for the purpose of convenient and brief description, division of the foregoing functional modules is taken as an example for illustration. During actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

## Claims

1. An interaction method, comprising:
receiving (S1201) a first operation of a first user in a vehicle;
collecting (S1202), in response to the first operation, a line-of-sight direction of the first user and a first position of the vehicle, wherein the line-of-sight direction comprises a horizontal line-of-sight direction and a vertical line-of-sight direction; and
marking and displaying (S1203), on a display interface based on the first position and the horizontal line-of-sight direction, one or more geographical markers that meet a first condition,
the method **characterised in that** the marking and displaying is further based on a line-of-sight height included angle, wherein the line-of-sight height included angle is an included angle between the vertical line-of-sight direction and a horizontal ground.

2. The method according to claim 1, wherein the method further comprises:
receiving (S1204) a second operation on the display interface, wherein the second operation indicates a target geographical marker that the user pays attention to;
determining (S1205), in response to the second operation, the target geographical marker in the one or more geographical markers that meet the first condition; and
performing (S1206) a third operation on the target geographical marker.

3. The method according to claim 1 or 2, wherein the first condition comprises:
in the horizontal line-of-sight direction and within a range of the line-of-sight height included angle; or
not obstructed in the horizontal line-of-sight direction and within a range of the line-of-sight height included angle, and a theoretical height less than or equal to an actual height.

4. The method according to claim 1 or 2, wherein the marking and displaying (S1203) comprises at least one of the following: color deepening displaying, contour displaying, contour filling displaying, and label displaying.

5. The method according to claim 1 or 2, wherein after the marking and displaying (S1203), on a display interface based on the first position, the horizontal line-of-sight direction, and a line-of-sight height included angle, one or more geographical markers that meet a first condition, the method further comprises:
numbering one or more first geographical markers based on a first preset sorting.

6. The method according to claim 1 or 2, wherein the second operation comprises at least one of the following: a voice operation, a touch operation, a button operation, a gesture operation, and a gaze operation.

7. The method according to claim 6, wherein the second operation comprises the gesture operation, and the determining (S1205), in response to the second operation, the target geographical marker in the one or more geographical markers that meet the first condition comprises:
performing, in response to a first gesture operation, color deepening displaying on a to-be-selected geographical marker in the one or more geographical markers that meet the first condition; and
determining, in response to a second gesture operation, the to-be-selected geographical marker as the target geographical marker.

8. The method according to claim 2, wherein the third operation comprises at least one of the following: broadcasting, navigation, and information pushing.

9. An electronic apparatus (100, 1100, 1300), wherein the electronic apparatus comprises:
a first receiving unit (1110, 1310), configured to receive a first operation of a first user in a vehicle;
a collection unit (1120, 1320), configured to collect, in response to the first operation, a line-of-sight direction of the first user and a first position of the vehicle, wherein the line-of-sight direction comprises a horizontal line-of-sight direction and a vertical line-of-sight direction; and
a display unit (1130, 1330), configured to mark and display, on a display interface based on the first position and the horizontal line-of-sight direction, one or more geographical markers that meet a first condition,
the electronic apparatus **characterised in that** the display unit is further configured to mark and display the one or more geographical markers based on a line-of-sight height included angle, wherein the line-of-sight height included angle is an included angle between the vertical line-of-sight direction and a horizontal ground.

10. The electronic apparatus (100, 1100, 1300) according to claim 9, wherein the electronic apparatus further comprises:
a second receiving unit (1140, 1340), configured to receive a second operation on the display interface, wherein the second operation indicates a target geographical marker that the user pays attention to;
a determining unit (1350), configured to determine, in response to the second operation, the target geographical marker in the one or more geographical markers that meet the first condition; and
an execution unit (1360), configured to perform a third operation on the target geographical marker.

11. The electronic apparatus (100, 1100, 1300) according to claim 9 or 10, wherein the first condition comprises:
in the horizontal line-of-sight direction and within a range of the line-of-sight height included angle; or
not obstructed in the horizontal line-of-sight direction and within a range of the line-of-sight height included angle, and a theoretical height less than or equal to an actual height.

12. The electronic apparatus (100, 1100, 1300) according to claim 9 or 10, wherein the marking and displaying comprises at least one of the following: color deepening displaying, contour displaying, contour filling displaying, and label displaying.

13. The electronic apparatus (100, 1100, 1300) according to claim 9 or 10, wherein the electronic apparatus further comprises:
a numbering unit (1180, 1370), configured to number one or more first geographical markers based on a first preset sorting.

14. The electronic apparatus (100, 1100, 1300) according to claim 9 or 10, wherein the second operation comprises at least one of the following: a voice operation, a touch operation, a button operation, a gesture operation, and a gaze operation.

15. The electronic apparatus (100, 1100, 1300) according to claim 14, wherein the second operation comprises the gesture operation, and the determining unit (1350) is further configured to:
perform, in response to a first gesture operation, color deepening displaying on a to-be-selected geographical marker in the one or more geographical markers that meet the first condition; and
determine, in response to a second gesture operation, the to-be-selected geographical marker as the target geographical marker.

## Patentansprüche

1. Interaktionsverfahren, umfassend:
Empfangen (S1201) einer ersten Operation eines ersten Benutzers in einem Fahrzeug; Sammeln (S1202), als Reaktion auf die erste Operation, einer Sichtlinienrichtung des ersten Benutzers und einer ersten Position des Fahrzeugs, wobei die Sichtlinienrichtung eine horizontale Sichtlinienrichtung und eine vertikale Sichtlinienrichtung umfasst; und
Markieren und Anzeigen (S1203), auf einer Anzeigeschnittstelle basierend auf der ersten Position und der horizontalen Sichtlinienrichtung, einer oder mehrerer geografischer Markierungen, die eine erste Bedingung erfüllen,
wobei das Verfahren **dadurch gekennzeichnet ist, dass** das Markieren und Anzeigen ferner auf einem eingeschlossenen Sichtlinienhöhenwinkel basiert, wobei der eingeschlossene Sichtlinienhöhenwinkel ein eingeschlossener Winkel zwischen der vertikalen Sichtlinienrichtung und einem horizontalen Boden ist.

2. Verfahren nach Anspruch 1, wobei das Verfahren ferner Folgendes umfasst:
Empfangen (S1204) einer zweiten Operation auf der Anzeigeschnittstelle, wobei die zweite Operation eine geografische Zielmarkierung angibt, der der Benutzer Aufmerksamkeit schenkt;
Bestimmen (S1205), als Reaktion auf die zweite Operation, der geografischen Zielmarkierung in der einen oder den mehreren geografischen Markierungen, die die erste Bedingung erfüllen; und
Durchführen (S1206) einer dritten Operation an der geografischen Zielmarkierung.

3. Verfahren nach Anspruch 1 oder 2, wobei die erste Bedingung Folgendes umfasst:
in der horizontalen Sichtlinienrichtung und innerhalb eines Bereichs des eingeschlossenen Sichtlinienhöhenwinkels; oder
nicht in der horizontalen Sichtlinienrichtung behindert und innerhalb eines Bereichs des eingeschlossenen Sichtlinienhöhenwinkels, und eine theoretische Höhe kleiner oder gleich einer tatsächlichen Höhe.

4. Verfahren nach Anspruch 1 oder 2, wobei das Markieren und Anzeigen (S1203) mindestens eines des Folgenden umfasst: Farbvertiefungsanzeige, Konturanzeige, Konturfüllungsanzeige und Labelanzeige.

5. Verfahren nach Anspruch 1 oder 2, wobei das Verfahren nach dem Markieren und Anzeigen (S1203), auf einer Anzeigeschnittstelle basierend auf der ersten Position, der horizontalen Sichtlinienrichtung und einem eingeschlossenen Sichtlinienhöhenwinkel, einer oder mehrerer geografischer Markierungen, die eine erste Bedingung erfüllen, ferner Folgendes umfasst:
Nummerieren einer oder mehrerer erster geografischer Markierungen basierend auf einer ersten voreingestellten Sortierung.

6. Verfahren nach Anspruch 1 oder 2, wobei die zweite Operation mindestens eines des Folgenden umfasst: eine Sprachoperation, eine Berührungsoperation, eine Tastenoperation, eine Gestenoperation und eine Blickoperation.

7. Verfahren nach Anspruch 6, wobei die zweite Operation die Gestenoperation umfasst, und das Bestimmen (S1205), als Reaktion auf die zweite Operation, der geografischen Zielmarkierung in der einen oder den mehreren geografischen Markierungen, die die erste Bedingung erfüllen, Folgendes umfasst:
Durchführen, als Reaktion auf eine erste Gestenoperation, einer Farbvertiefungsanzeige an einer auszuwählenden geografischen Markierung in der einen oder den mehreren geografischen Markierungen, die die erste Bedingung erfüllen; und
Bestimmen, als Reaktion auf eine zweite Gestenoperation, der auszuwählenden geografischen Markierung als die geografische Zielmarkierung.

8. Verfahren nach Anspruch 2, wobei die dritte Operation mindestens eines des Folgenden umfasst: Broadcasting, Navigation und Informations-Pushing.

9. Elektronische Vorrichtung (100, 1100, 1300), wobei die elektronische Vorrichtung Folgendes umfasst:
eine erste Empfangseinheit (1110, 1310), die ausgelegt ist zum Empfangen einer ersten Operation eines ersten Benutzers in einem Fahrzeug;
eine Sammeleinheit (1120, 1320), die ausgelegt ist zum Sammeln, als Reaktion auf die erste Operation, einer Sichtlinienrichtung des ersten Benutzers und einer ersten Position des Fahrzeugs, wobei die Sichtlinienrichtung eine horizontale Sichtlinienrichtung und eine vertikale Sichtlinienrichtung umfasst; und
eine Anzeigeeinheit (1130, 1330), die ausgelegt ist zum Markieren und Anzeigen, auf einer Anzeigeschnittstelle basierend auf der ersten Position und der horizontalen Sichtlinienrichtung, einer oder mehrerer geografischer Markierungen, die eine erste Bedingung erfüllen,
wobei die elektronische Vorrichtung **dadurch gekennzeichnet ist, dass** die Anzeigeeinheit ferner ausgelegt ist zum Markieren und Anzeigen der einen oder der mehreren geografischen Markierungen basierend auf einem eingeschlossenen Sichtlinienhöhenwinkel, wobei der eingeschlossene Sichtlinienhöhenwinkel ein eingeschlossener Winkel zwischen der vertikalen Sichtlinienrichtung und einem horizontalen Boden ist.

10. Elektronische Vorrichtung (100, 1100, 1300) nach Anspruch 9, wobei die elektronische Vorrichtung ferner Folgendes umfasst:
eine zweite Empfangseinheit (1140, 1340), die ausgelegt ist zum Empfangen einer zweiten Operation auf der Anzeigeschnittstelle, wobei die zweite Operation eine geografische Zielmarkierung angibt, der der Benutzer Aufmerksamkeit schenkt;
eine Bestimmungseinheit (1350), die ausgelegt ist zum Bestimmen, als Reaktion auf die zweite Operation, der geografischen Zielmarkierung in der einen oder den mehreren geografischen Markierungen, die die erste Bedingung erfüllen; und
eine Ausführungseinheit (1360), die ausgelegt ist zum Durchführen einer dritten Operation an der geografischen Zielmarkierung.

11. Elektronische Vorrichtung (100, 1100, 1300) nach Anspruch 9 oder 10, wobei die erste Bedingung Folgendes umfasst:
in der horizontalen Sichtlinienrichtung und innerhalb eines Bereichs des eingeschlossenen Sichtlinienhöhenwinkels; oder
nicht in der horizontalen Sichtlinienrichtung behindert und innerhalb eines Bereichs des eingeschlossenen Sichtlinienhöhenwinkels, und eine theoretische Höhe kleiner oder gleich einer tatsächlichen Höhe.

12. Elektronische Vorrichtung (100, 1100, 1300) nach Anspruch 9 oder 10, wobei das Markieren und Anzeigen mindestens eines des Folgenden umfasst: Farbvertiefungsanzeige, Konturanzeige, Konturfüllungsanzeige und Labelanzeige.

13. Elektronische Vorrichtung (100, 1100, 1300) nach Anspruch 9 oder 10, wobei die elektronische Vorrichtung ferner Folgendes umfasst:
eine Nummerierungseinheit (1180, 1370), die ausgelegt ist zum Nummerieren einer oder mehrerer erster geografischer Markierungen basierend auf einer ersten voreingestellten Sortierung.

14. Elektronische Vorrichtung (100, 1100, 1300) nach Anspruch 9 oder 10, wobei die zweite Operation mindestens eines des Folgenden umfasst: eine Sprachoperation, eine Berührungsoperation, eine Tastenoperation, eine Gestenoperation und eine Blickoperation.

15. Elektronische Vorrichtung (100, 1100, 1300) nach Anspruch 14, wobei die zweite Operation die Gestenoperation umfasst, und die Bestimmungseinheit (1350) ferner ausgelegt ist zum:
Durchführen, als Reaktion auf eine erste Gestenoperation, einer Farbvertiefungsanzeige an einer auszuwählenden geografischen Markierung in der einen oder den mehreren geografischen Markierungen, die die erste Bedingung erfüllen; und
Bestimmen, als Reaktion auf eine zweite Gestenoperation, der auszuwählenden geografischen Markierung als die geografische Zielmarkierung.

## Revendications

1. Procédé d'interaction, comprenant :
la réception (S1201) d'une première opération d'un premier utilisateur dans un véhicule ;
la collecte (S1202), en réponse à la première opération, d'une direction de ligne visuelle du premier utilisateur et d'une première position du véhicule, la direction de ligne visuelle comprenant une direction de ligne visuelle horizontale et une direction de ligne visuelle verticale ; et
le marquage et l'affichage (S1203), sur une interface d'affichage sur la base de la première position et de la direction de ligne visuelle horizontale, d'un ou de plusieurs marqueurs géographiques qui satisfont une première condition,
le procédé étant **caractérisé en ce que** le marquage et l'affichage sont en outre basés sur un angle inclus de hauteur de ligne visuelle, l'angle inclus de hauteur de ligne visuelle étant un angle inclus entre la direction de ligne visuelle verticale et un sol horizontal.

2. Procédé selon la revendication 1, le procédé comprenant en outre :
la réception (S1204) d'une deuxième opération sur l'interface d'affichage, la deuxième opération indiquant un marqueur géographique cible auquel l'utilisateur porte attention ;
la détermination (S1205), en réponse à la deuxième opération, du marqueur géographique cible dans les un ou plusieurs marqueurs géographiques qui satisfont la première condition ; et
la réalisation (S1206) d'une troisième opération sur le marqueur géographique cible.

3. Procédé selon la revendication 1 ou la revendication 2, dans lequel la première condition comprend :
dans la direction de ligne visuelle horizontale et au sein d'une plage de l'angle inclus de hauteur de ligne visuelle ; ou
non obstrué dans la direction de ligne visuelle horizontale et au sein d'une plage de l'angle inclus de hauteur de ligne visuelle, et une hauteur théorique inférieure ou égale à une hauteur réelle.

4. Procédé selon la revendication 1 ou la revendication 2, dans lequel le marquage et l'affichage (S1203) comprend au moins l'un des affichages suivants : affichage d'approfondissement de couleur, affichage de contour, affichage de remplissage de contour, et affichage d'étiquette.

5. Procédé selon la revendication 1 ou la revendication 2, dans lequel après le marquage et l'affichage (S1203), sur une interface d'affichage sur la base de la première position, de la direction de ligne visuelle horizontale, et d'un angle inclus de hauteur de ligne visuelle, d'un ou de plusieurs marqueurs géographiques qui satisfont une première condition, le procédé comprend en outre :
la numérotation d'un ou de plusieurs premiers marqueurs géographiques sur la base d'un premier tri prédéfini.

6. Procédé selon la revendication 1 ou la revendication 2, dans lequel la deuxième opération comprend au moins l'une des opérations suivantes : une opération vocale, une opération tactile, une opération de bouton, une opération gestuelle, et une opération de regard.

7. Procédé selon la revendication 6, dans lequel la deuxième opération comprend l'opération gestuelle, et la détermination (S1205), en réponse à la deuxième opération, du marqueur géographique cible dans les un ou plusieurs marqueurs géographiques qui satisfont la première condition comprend :
la réalisation, en réponse à une première opération gestuelle, d'un affichage d'approfondissement de couleur sur un marqueur géographique à sélectionner parmi les un ou plusieurs marqueurs géographiques qui satisfont la première condition ; et
la détermination, en réponse à une deuxième opération gestuelle, du marqueur géographique à sélectionner en tant que marqueur géographique cible.

8. Procédé selon la revendication 2, dans lequel la troisième opération comprend au moins l'un des éléments suivants : diffusion, navigation, et poussée d'informations.

9. Appareil électronique (100, 1100, 1300), l'appareil électronique comprenant :
une première unité de réception (1110, 1310), configurée pour recevoir une première opération d'un premier utilisateur dans un véhicule ;
une unité de collecte (1120, 1320), configurée pour collecter, en réponse à la première opération, une direction de ligne visuelle du premier utilisateur et une première position du véhicule, la direction de ligne visuelle comprenant une direction de ligne visuelle horizontale et une direction de ligne visuelle verticale ; et
une unité d'affichage (1130, 1330), configurée pour marquer et afficher, sur une interface d'affichage sur la base de la première position et de la direction de ligne visuelle horizontale, un ou plusieurs marqueurs géographiques qui satisfont une première condition,
l'appareil électronique étant **caractérisé en ce que** l'unité d'affichage est en outre configurée pour marquer et afficher les un ou plusieurs marqueurs géographiques sur la base d'un angle inclus de hauteur de ligne visuelle, l'angle inclus de hauteur de ligne visuelle étant un angle inclus entre la direction de ligne visuelle verticale et un sol horizontal.

10. Appareil électronique (100, 1100, 1300) selon la revendication 9, dans lequel l'appareil électronique comprend en outre :
une deuxième unité de réception (1140, 1340), configurée pour recevoir une deuxième opération sur l'interface d'affichage, la deuxième opération indiquant un marqueur géographique cible auquel l'utilisateur porte attention ;
une unité de détermination (1350), configurée pour déterminer, en réponse à la deuxième opération, le marqueur géographique cible parmi les un ou plusieurs marqueurs géographiques qui satisfont la première condition ; et
une unité d'exécution (1360), configurée pour réaliser une troisième opération sur le marqueur géographique cible.

11. Appareil électronique (100, 1100, 1300) selon la revendication 9 ou la revendication 10, dans lequel la première condition comprend :
dans la direction de ligne visuelle horizontale et au sein d'une plage de l'angle inclus de hauteur de ligne visuelle ; ou
non obstrué dans la direction de ligne visuelle horizontale et au sein d'une plage de l'angle inclus de hauteur de ligne visuelle, et une hauteur théorique inférieure ou égale à une hauteur réelle.

12. Appareil électronique (100, 1100, 1300) selon la revendication 9 ou la revendication 10, dans lequel le marquage et l'affichage comprennent au moins l'un des affichages suivants : affichage d'approfondissement de couleur, affichage de contour, affichage de remplissage de contour, et affichage d'étiquette.

13. Appareil électronique (100, 1100, 1300) selon la revendication 9 ou la revendication 10, dans lequel l'appareil électronique comprend en outre :
une unité de numérotation (1180, 1370), configurée pour numéroter un ou plusieurs premiers marqueurs géographiques sur la base d'un premier tri prédéfini.

14. Appareil électronique (100, 1100, 1300) selon la revendication 9 ou la revendication 10, dans lequel la deuxième opération comprend au moins l'une des opérations suivantes : une opération vocale, une opération tactile, une opération de bouton, une opération gestuelle, et une opération de regard.

15. Appareil électronique (100, 1100, 1300) selon la revendication 14, dans lequel la deuxième opération comprend l'opération gestuelle, et l'unité de détermination (1350) est en outre configurée pour :
réaliser, en réponse à une première opération gestuelle, un affichage d'approfondissement de couleur sur un marqueur géographique à sélectionner parmi les un ou plusieurs marqueurs géographiques qui satisfont la première condition ; et
déterminer, en réponse à une deuxième opération gestuelle, le marqueur géographique à sélectionner en tant que marqueur géographique cible.
